# FASCICULE DE BREVET EUROPEEN

(11) **EP 0 604 299 B1**
(45) Date de publication et mention de la délivrance du brevet: **29.01.1997**
(21) Numéro de dépôt: 93403107.1
(22) Date de dépôt: 20.12.1993
(51) Int. Cl.: B64C 27/45, B64C 27/48, F01D 5/30

(54) **Dispositif de liaison pale-moyeu à attache feuilletée, pale de rotor munie d'une telle attache,et rotor équipé de telles pales**
Blatt-Nabe geschichtete Verbindungsvorrichtung, Rotorblatt und damit ausgerüsteter Rotor
Blade-hub lamellar connection device, rotor blade and rotor featuring it

(30) Priorité: 23.12.1992 FR 9215609
(43) Date de publication de la demande: 29.06.1994
(73) Titulaire: EUROCOPTER FRANCE, F-13725 Marignane Cédex (FR)
(72) Inventeur: Aubry, Jacques Antoine, FR-13480 Cabries (FR)
(74) Mandataire: Bérogin, Francis

(56) Documents cités:
- EP-A- 0 033 275
- EP-A- 0 212 724
- FR-A- 1 593 008
- FR-A- 2 622 170
- US-A- 2 999 668

## Description

L'invention concerne une pale de rotor avec son dispositif du liaison au moyeu dudit rotor.

L'invention se rapporte également à un rotor arrière caréné multi-pales à pas variable pour hélicoptère.

La pale, du type retenu au moyeu par l'extrémité radiale interne (par rapport à l'axe du moyeu) d'au moins un faisceau composite, torsible et de préférence également flexible, d'attache de pale, et connu par les brevets FR-2 542 695 et FR-2 616 409, comprend :
- une coque rigide, à profil aérodynamique, allongée longitudinalement selon l'envergure de la pale, et prolongée par un pied de paie tubulaire, du côté relié au moyeu,
- une ossature résistante, au moins partiellement logée sensiblement longitudinalement dans la coque, et
- une partie d'emplanture, comprenant au moins un faisceau torsible d'attache de la pale, ledit faisceau étant allongé sensiblement dans le prolongement longitudinal de la coque et torsible autour de son axe longitudinal, et réalisé en matériau composite comprenant des fibres sensiblement unidirectionnelles agglomérées par une résine synthétique rigidifiée, ledit faisceau étant relié à ladite ossature et s'étendant au moins partiellement à l'extérieur de la coque en traversant le pied de pale, de sorte à présenter, du côté opposé à la coque, une portion d'extrémité pour la liaison dudit faisceau au moyeu.

La propriété du faisceau allongé composite d'être torsible autorise la commande du pas de la pale par torsion du faisceau autour de son axe longitudinal, et sa propriété d'être de préférence également flexible autorise les oscillations angulaires de battement et en trainée de la pale.

Dans les deux brevets précités, la partie d'emplanture de la pale est constituée par la partie d'extrémité radiale interne, sortant de la coque en traversant le pied de pale, d'un unique faisceau de stratifils qui est replié sur lui-même en sensiblement deux moitiés parallèles et côte-à-côte ou légèrement espacées l'une de l'autre, qui forment la majeure partie, fixée dans la coque, d'un longeron en forme de lame allongée et d'axe longitudinal sensiblement parallèle à celui de la pale.

Cette partie d'emplanture est ainsi aménagée en boucle, qui permet le rattachement individuel de chaque pale au moyeu du rotor en entourant une unique bobine d'attache métallique boulonnée sur le moyeu.

A cet effet, l'épaisseur de la partie d'emplanture, mesurée selon l'axe de la bobine, est progressivement croissante de la partie du faisceau fixée dans la coque vers l'extrémité libre de la boucle entourant la bobine métallique, tandis que sa largeur, mesurée sensiblement du bord d'attaque vers le bord de fuite de la pale, diminue progressivement de manière correspondante, la section transversale du faisceau demeurant d'une aire sensiblement constante.

Les procédés de fabrication de pales selon les brevets précités sont d'une mise en oeuvre longue et délicate, et conduisent donc à des pales de fabrication coûteuse. En effet la structure de la partie d'emplanture en boucle de ces pales impose de donner par flexion aux fibres constituant le faisceau une courbure à faible rayon, avec des risques de rupture des fibres pendant cette opération d'enroulement des stratifils. De plus, ce rayon de courbure étant variable en fonction de la position de chaque fibre dans l'épaisseur du faisceau, le rayon étant d'autant plus faible que la fibre est placée plus près du centre, il est malaisé, lors de la fabrication de l'enroulement, de donner à chaque fibre une tension uniforme de telle sorte que toutes les fibres participent de façon sensiblement équivalente à la transmission dans l'attache de la charge de traction sur l'ensemble du faisceau. Enfin la section transversale du faisceau de stratifils étant pratiquement imposée dans la partie d'emplanture en boucle, il n'y a pas de possibilité d'optimiser la géométrie de la section transversale du faisceau indépendamment de la bobine d'attache métallique pour rechercher les meilleures répartitions de contrainte et de raideur en torsion dans le faisceau.

Le problème à la base de l'invention est de remédier à ces inconvénients, liés à la configuration en boucle de la partie d'emplanture de la pale, et de proposer une pale du type précité, avec son dispositif de liaison au moyeu qui soit plus performante et plus économique que celles faisant l'objet des brevets précités.

Un but de l'invention est de proposer une pale avec son dispositif de liaison au moyeu, le dispositif étant au moins partiellement en composite et la pale ayant une partie d'emplanture comprenant au moins un faisceau torsible en composite, dont les structures permettent une utilisation optimisée de la matière, et de l'encombrement, ainsi que de ne pas interrompre ni perturber l'agencement des fibres unidirectionnelles du faisceau torsible de la partie d'emplanture de la pale, au niveau du dispositif de liaison attachant la pale au moyeu.

En particulier, un but de l'invention est de proposer une pale avec son dispositif de liaison au moyeu, la pale étant du type précité, et assurant une amélioration de la tenue en fatigue de ses moyens de liaison et de retenue au moyeu, en permettant d'optimiser la géométrie de la section transversale du faisceau torsible en composite de la partie d'emplanture, en ce qui concerne la répartition de contrainte et la raideur en torsion, et ceci indépendamment des moyens particuliers de retenue de la pale au moyeu.

Un autre but de l'invention est de proposer une pale du type précité avec son dispositif de liaison au moyeu et dont la structure permet une diminution du prix de fabrication.

A cet effet, l'invention a pour objet une pale de rotor avec son dispositif de liaison au moyeu dudit rotor, la pale étant du type précité, et se caractérisant en ce que le dispositif de liaison comprend, pour au moins un faisceau torsible, une attache feuilletée comportant au moins deux éléments feuilletés comprenant chacun un empilement d'au moins deux couches de fibres agglomérées par une résine synthétique rigidifiée, et entre lesquels ladite portion d'extrémité de liaison, qui est sensiblement aplatie, est prise en sandwich et solidarisée auxdits éléments feuilletés, par l'une au moins des résines du faisceau et de l'attache feuilletée, l'ensemble solidaire de ladite attache feuilletée et de ladite portion d'extrémité étant en butée, vers la coque, contre des moyens de retenue de l'attache feuilletée et de la pale au moyeu.

Une telle pale avec son dispositif de liaison a pour avantage que la liaison par attache feuilletée entre le faisceau torsible de la pale et des moyens de retenue de l'attache feuilletée et de la pale au moyeu permet de transmettre à ce moyeu les efforts, notamment centrifuges, venant de la pale et sollicitant le faisceau, à deux niveaux : d'une part, il se produit un transfert des efforts axiaux sollicitant le faisceau dans les couches de fibres des éléments feuilletés de l'attache par cisaillement de la liaison entre ledit faisceau et lesdites couches de fibres, d'autre part, il se produit un transfert des efforts sollicitant lesdites couches de fibres dans lesdits moyens de retenue de l'attache feuilletée de la pale au moyeu par cisaillement, traction et compression dans ces couches de fibres agglomérées par une résine.

Il est ainsi possible de faire une utilisation optimisée de l'encombrement disponible pour lier une pale au moyeu par une utilisation optimisée des matériaux composites réalisant l'attache feuilletée, sans perturber ni interrompre les fibres unidirectionnelles du faisceau torsible au niveau de la partie de ce faisceau qui est solidarisée à l'attache feuilletée.

On peut ainsi optimiser aussi la géométrie de la section du faisceau torsible pour obtenir la répartition de contraintes et la raideur en torsion souhaitées, de façon à améliorer la tenue en fatigue de la pale et de sa liaison au moyeu, sans compliquer la réalisation de l'attache feuilletée, dont la forme et les dimensions, en particulier la section transversale des éléments feuilletés, sont choisis en fonction de la nature des moyens de retenue au moyeu, afin de permettre une bonne transmission d'effort à ces derniers.

L'invention a enfin pour objet un rotor multi-pales, en particulier à pas variable, utilisable comme rotor arrière, notamment caréné, pour giravion, notamment pour un hélicoptère, et l'invention propose un tel rotor dont l'architecture générale est analogue à celle du rotor décrit dans le brevet FR-2 542 695, dont l'encombrement et le mode d'entraînement peuvent être conservés, afin que le rotor multi-pales selon l'invention puisse être substituable à celui décrit dans le brevet précité.

A cet effet, le rotor multi-pales selon l'invention, comme décrit dans FR-2 542 695 et comprenant :
- un arbre d'entraînement, destiné à être entraîné en rotation autour d'un axe de rotation du rotor,
- un moyeu solidaire en rotation de l'arbre d'entraînement,
- plusieurs pales, dont chacune est reliée au moyeu par une partie d'emplanture à au moins un faisceau en composite, allongé et torsible,
   se caractérise en ce que chaque pale est une pale avec son dispositif de liaison, propre à l'invention et telle que définie ci-dessus, dont la partie d'emplanture est reliée au moyeu par ledit dispositif de liaison.

D'autres avantages et caractéristiques de l'invention ressortiront de la description donnée ci-dessous, à titre non limitatif, d'exemples de réalisations décrits en référence aux dessins annexés sur lesquels :
- la figure 1 est une vue schématique en perspective avec arrachement partiel d'une portion de pale, du côté de son pied et de sa partie d'emplanture sur un moyeu non représenté,
- la figure 2 est une vue schématique, en partie en élévation latérale et en partie en coupe, d'un dispositif de liaison d'une partie d'emplanture de pale analogue à celle de la pale de la figure 1, sur un moyeu de rotor,
- la figure 3 est une vue en coupe schématique selon III-III de la figure 2 montrant une forme en plan de l'attache feuilletée différente de celle de la pale de la figure 1,
- la figure 4 est une vue schématique en élévation latérale de l'extrémité d'une partie d'emplanture de pale à faisceau torsible monolame et de son attache feuilletée,
- les figures 5 et 6 sont des coupes transversales respectivement selon V-V et VI-VI de la figure 4,
- la figure 7 est une vue analogue à la figure 4 pour une partie d'emplanture de pale à multi-faisceaux torsibles à deux lames de mêmes sections transversales,
- la figure 8 est une coupe transversale selon VIII-VIII de la figure 7,
- la figure 9 est une vue analogue à la figure 4 pour une partie d'emplanture de pale à multi-faisceaux torsibles à trois lames de sections transversales différentes,
- la figure 10 est une vue en coupe transversale selon X-X de la figure 9,
- la figure 11 est une vue schématique, en partie en coupe et en partie en élévation latérale, d'un dispositif de liaison d'une pale à partie d'emplanture à faisceau torsible monolame sur un moyeu de rotor,
- la figure 12 est une coupe selon XII-XII de la figure 11, et représente la forme en plan de l'attache feuilletée et de la lame du faisceau torsible de la pale,
- les figures 13 et 14 sont deux vues schématiques de dessus de deux exemples de dispositifs de liaison pale-moyeu associant plusieurs parties d'emplanture de pales voisines d'un même rotor et leurs attaches feuilletées,
- la figure 15 est une vue analogue à la figure 11 pour une pale en composite à faisceaux torsibles intégrés à l'ossature de la pale, telle que celle de la figure 1, destinée à l'équipement d'un rotor arrière caréné d'hélicoptère,
- la figure 16 est une vue analogue à la figure 12 pour la pale de la figure 15,
- la figure 17 est une vue analogue à la figure 15 pour une pale métallique, dont l'ossature est indépendante de sa partie d'emplanture à faisceaux torsibles,
- la figure 18 est une vue analogue à la figure 16 pour la pale métallique de la figure 17, également destinée à l'équipement d'un rotor arrière caréné d'hélicoptère,
- la figure 19 est une coupe sensiblement horizontale de la partie arrière du fuselage ou de l'empennage d'un hélicoptère équipé d'un rotor arrière ou anti-couple caréné selon l'invention,
- la figure 20 est une coupe axiale partielle du rotor de la figure 19, et
- la figure 21 est une vue schématique radiale partielle, en partie en coupe et en partie en élévation latérale, du rotor de la figure 20.

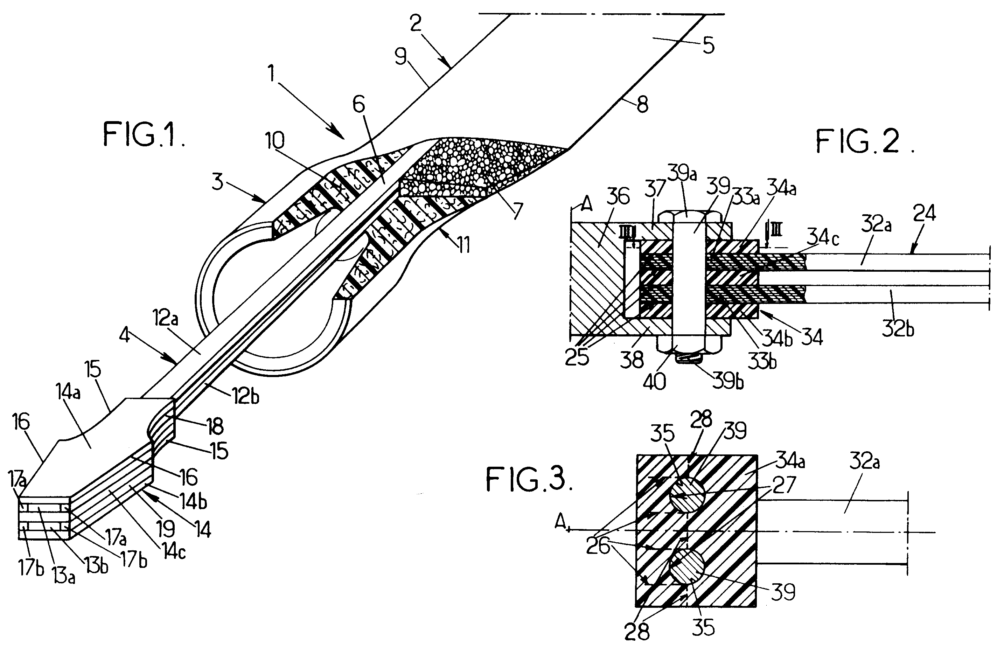

La pale 1 de la figure 1 a sa partie courante 2 qui se prolonge, du côté opposé au bout de pale (non représenté), par un pied de pale 3 tubulaire, traversé par une partie d'emplanture 4, par laquelle la pale 1 se relie à un moyeu de rotor.

Dans sa partie courante 2, la pale 1, essentiellement en matériaux composites, comprend une coque rigide 5, ayant la forme du profil aérodynamique souhaité et allongée longitudinalement selon l'envergure de la pale, une ossature résistante constituée d'un longeron 6, qui est logé longitudinalement dans la coque 5, et s'étend sensiblement parallèlement à l'axe longitudinal de la pale, et un corps de remplissage 7, logé dans la coque 5, entre le longeron 6 et le bord de fuite 8 de la pale.

La pale peut également comprendre une coiffe, en titane ou acier inoxydable, pour la protection de son bord d'attaque 9, un corps de remplissage avant et/ou des renforts composites de l'avant de la pale, logé(s) dans la coque 5 entre le longeron 6 et le bord d'attaque 9, ainsi qu'éventuellement un étrier de renfort du bord de fuite 8, lesquels corps de remplissage avant, renforts avant, étrier de renfort et coiffe de protection n'ont pas été représentés sur la figure 1, afin de ne pas surcharger le dessin.

La coque 5 peut être réalisée comme décrit dans le brevet FR-2 542 695 précité, par un empilement constitué, de l'extérieur vers l'intérieur de la pale, de deux couches superposées de tissus en fibres de verre ou aramides, disposées de telle sorte que, par exemple, leurs fils de chaîne soient croisés à angle droit et inclinés à 45° sur l'axe longitudinal de la pale, et de deux couches de tissus de fibres de carbone, de préférence également croisées et inclinées à 45°, l'ensemble de ces quatre couches étant aggloméré par une résine synthétique rigidifiée, de façon à former un caisson creux assurant la rigidité en torsion de l'ensemble de la pale.

Le corps de remplissage arrière 7, comme tout éventuel corps de remplissage avant, est un élément en une matière synthétique légère, par exemple une mousse ou une matière alvéolaire ou cellulaire, dont la forme externe correspond au volume interne de la coque 5, entre le longeron 6 et le bord de fuite 8.

Le longeron 6 est constitué d'un unique écheveau ou faisceau de fibres unidirectionnelles et longitudinales à haute résistance mécanique, organiques ou minérales, agglomérées par une résine synthétique rigidifiée, et cet écheveau est agencé en une lame allongée, pleine, de section sensiblement rectangulaire, et réalisé par exemple, comme le longeron du brevet précité FR-2 542 695, en stratifils de fibres aramide agglomérés par une résine synthétique thermodurcie.

Par ses faces supérieure et inférieure, le longeron 6 est rigidement lié, soit directement, soit par l'intermédiaire de semelles en composite, à la coque 5 dans laquelle il est reçu. Ce longeron 6, destiné à reprendre les efforts centrifuges sollicitant la pale 1 en rotation, constitue, par une partie d'extrémité radiale interne (par rapport à l'axe du moyeu auquel la pale est liée) la partie d'emplanture 4, qui sort de la partie courante 2 en traversant le pied de pale tubulaire 3.

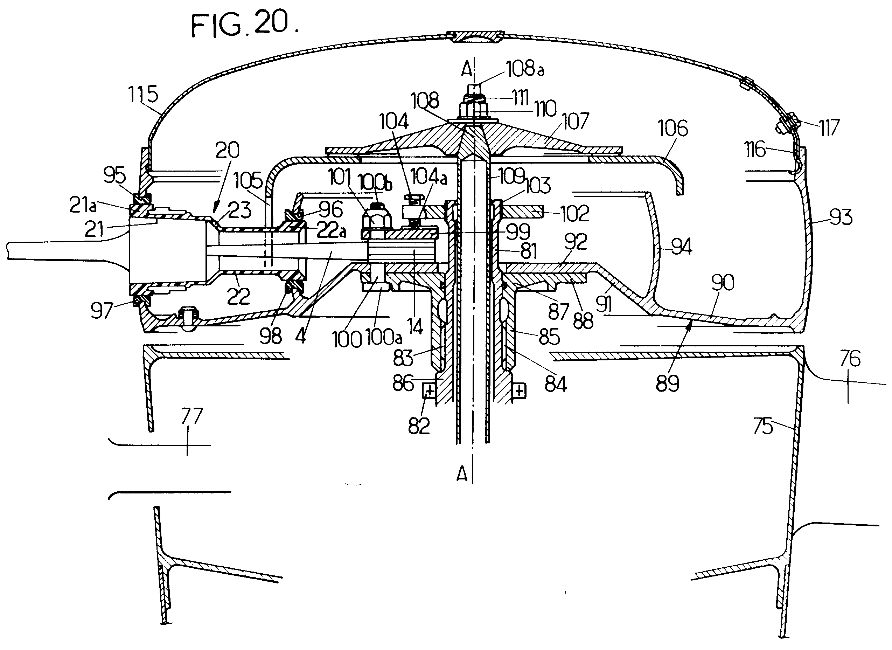

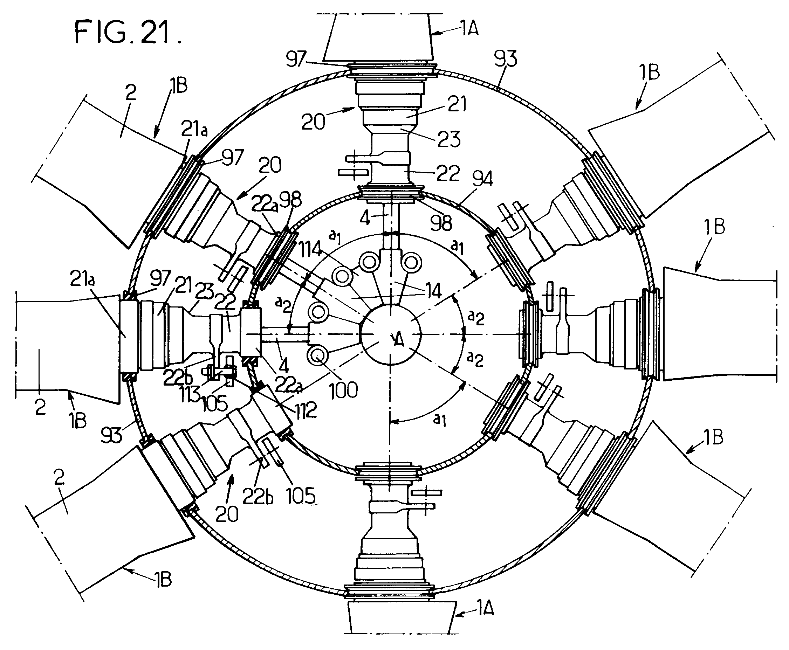

Ce pied de pale 3 présente un revêtement réalisé avec des prolongements des couches de tissus de fibres de la coque 5, et des couches de tissus de fibres de renfort 10 sont disposées à l'intérieur du revêtement du pied de pale 3 afin de lui donner une épaisseur suffisante. Il présente ainsi la forme d'un cylindre creux, dont l'extrémité radiale interne (du côté de la partie d'emplanture 4) s'aminçit progressivement, et qui est relié par son extrémité radiale externe à la partie courante 2 par une zone de transition 11 s'étendant sur une longueur voisine de la corde de la pale 1. Le pied de pale 3 est entouré d'un palier, auquel il est solidarisé, et qui est constitué par un manchon métallique de commande du pas de la pale, ce manchon, non représenté sur la figure 1, étant représenté sur les figures 20 et 21 et décrit en référence à ces dernières.

La partie d'emplanture 4, qui s'étend à l'extérieur de la coque 5 en traversant le pied de pale 3, comprend deux faisceaux d'attache de pale 12a et 12b, allongés sensiblement dans le prolongement longitudinal de la coque 5, et plus particulièrement dans le prolongement du longeron 6, puisque les deux faisceaux 12a et 12b sont réalisés par la subdivision en deux moitiés égales de la lame unique qui constitue ce longeron 6. Chacun des faisceaux 12a et 12b a donc la même structure composite que le longeron en lame unique 6, avec lequel il est d'une seule pièce, et les faisceaux 12a et 12b présentent la forme de deux lames de même section transversale rectangulaire, dont les faces inférieure et supérieure de chacune sont deux grandes faces planes et parallèles. Les deux faisceaux en lames 12a et 12b s'écartent progressivement l'un de l'autre, dans une direction sensiblement perpendiculaire à leurs faces planes inférieure et supérieure, à partir de leur extrémité de raccordement au longeron 6, jusqu'à leur portion d'extrémité de liaison opposée 13a ou 13b, par laquelle les lames 12a et 12b, chacune torsible autour de son axe longitudinal, sont solidarisées l'une à l'autre et destinées à être reliées au moyeu de rotor par une attache feuilletée 14.

L'attache feuilletée 14 comprend trois éléments feuilletés respectivement supérieur 14a, inférieur 14b et intercalaire 14c, qui sont à l'aplomb les uns au-dessus des autres, de sorte que la portion d'extrémité de liaison 13a de la lame supérieure 12a est prise en sandwich entre les éléments feuilletés supé-rieur 14a et intercalaire 14c, et que la portion d'extrémité de liaison 13b de la lame inférieure 12b est prise en sandwich entre les éléments feuilletés intercalaire 14c et inférieur 14b. Chacun des éléments feuilletés 14a, 14b et 14c est constitué d'un empilement de plusieurs couches, par exemple de dix à vingt couches, de fibres de renfort minérales ou organiques, à haute résistance mécanique, agglomérées par une résine synthétique rigidifiée. Dans chaque couche de fibres des éléments feuilletés, les fibres sont agencées selon une structure sensiblement aplatie, qui peut être une structure non tissée, un mât de fibres, une tresse de fibres ou, de préférence, un tissu de fibres pré-imprégné de la résine. De préférence, les fibres de renfort des couches ou feuilles des éléments feuilletés 14a, 14b, 14c, et la résine d'agglomération de ces fibres sont respectivement de même nature que, ou, à tout le moins, comptabiles avec, les fibres et la résine synthétique d'agglomération constituant les faisceaux en lames torsibles 12a et 12b, lesquels peuvent être réalisés, comme le longeron 6, sous la forme d'un faisceau de stratifils (rovings) accolés ou par la superposition de nappes de fibres unidirectionnelles pré-imprégnées de résine, par exemple de seize nappes de fibres ayant chacune une épaisseur d'environ 0,13 mm, pour chacune des deux lames 12a et 12b. Dans ce cas, chacun des éléments feuilletés 14a, 14b, 14c est par exemple constitué d'un empilement de quinze à vingt feuilles ou couches de tissus de fibres, dont les directions des fils de trame et des fils de chaîne sont inclinées d'environ 45° sur la direction longitudinale de la lame torsible 12a ou 12b, qui est elle-même sensiblement alignée sur l'axe longitudinal de la pale 1.

Les trois éléments feuilletés 14a, 14b, 14c présentent, vus en plan, la même forme évasée latéralement des deux côtés des portions d'extrémité de liaison 13a et 13b, lesquelles sont de forme sensiblement rectangulaire dans le prolongement et à l'extrémité des lames 12a et 12b.

La forme évasée de chaque élément feuilleté 14a, 14b, 14c, par rapport aux portions d'extrémité de liaisons 13a et 13b, est délimitée par les faces latérales de ces éléments, qui sont en saillie latérale par rapport aux portions d'extrémité 13a et 13b, et qui présentent, dans la partie de chaque élément feuilleté qui est tournée vers la coque 5, une zone concave 15, à concavité tournée latéralement d'un côté ou de l'autre de la pale et vers la coque 5 de cette dernière, tandis que dans la partie d'extrémité des éléments feuilletés 14a, 14b et 14c qui est tournée du côté opposé à la pale, les faces latérales de ces éléments feuilletés présentent des zones planes qui convergent l'une vers l'autre, en délimitant sur les éléments feuilletés une partie d'extrémité de forme sensiblement trapézoïdale, le prolongement de ces zones planes et convergentes 16 des faces latérales se coupant de préférence sensiblement au niveau de l'axe de rotation du rotor sur le moyeu duquel la pale est destinée à être montée.

Afin de combler l'espace délimité entre deux éléments feuilletés 14a, 14b et 14c voisins, par les parties de ces deux éléments voisins qui sont en saillie par rapport aux portions d'extrémités de liaisons 13a et 13b, l'attache feuilletée 14 comprend également quatre éléments feuilletés de remplissage latéral, dont deux, 17a, sont disposés chacun en appui contre l'une des faces latérales de la portion d'extrémité de liaison 13a, et en sandwich entre les parties latérales saillantes des éléments feuilletés supérieur 14a et intercalaire 14c, et dont les deux autres 17b sont disposés chacun en appui contre l'une des faces latérales de la portion d'extrémité de liaison 13b et pris en sandwich entre les parties latéralement saillantes des éléments feuilletés intercalaire 14c et inférieur 14b. Les éléments feuilletés de remplissage latéral 17a et 17b sont d'une structure feuilletée analogue à celle des autres éléments feuilletés 14a, 14b, 14c, et leurs faces latérales opposées à celle par laquelle ils sont chacun appliqués contre l'une des portions d'extrémités de liaisons 13a et 13b présentent également, comme les faces latérales des éléments feuilletés 14a, 14b et 14c, une zone concave 18, qui est dans le prolongement des zones concaves 15 des éléments feuilletés 14a, 14b, 14c, ainsi qu'une zone plane 19, qui est dans le prolongement des zones planes 16 des éléments feuilletés 14a, 14b, 14c, et qui est donc convergente avec la zone plane 19 de l'autre élément feuilleté de remplissage latéral 17a ou 17b correspondant.

La rigidification de la ou des résinesd'agglomération ou d'imprégnation des différentes couches de fibres des différents éléments feuilletés 14a, 14b, 14c, 17a et 17b, et des stratifils ou nappes de fibres unidirectionnelles des lames torsibles 12a et 12b ainsi que de leurs portions d'extrémités de liaison 13a et 13b, assure la solidarisation de tous les éléments feuilletés de l'attache 14 aux portions d'extrémités de liaisons 13a et 13b des deux lames torsibles 12a et 12b de la partie d'emplanture 4 de la pale 1.

Le mode de mise en oeuvre d'une pale 1 sur un rotor, et en particulier le mode de liaison d'une telle pale 1 par son attache feuilletée 14, sont décrits ci-dessous en référence aux figures 2 et 3.

Sur ces figures, on a schématiquement représenté une partie d'emplanture de pale 24 analogue à la partie d'emplanture 4 multi-faisceaux, à deux lames torsibles, de la pale de la figure 1.

Les deux faisceaux en lames 32a et 32b, en composite, allongées, de section rectangulaire dont la plus grande dimension s'étend sensiblement selon la corde de la pale, et espacées l'une de l'autre dans une direction sensiblement perpendiculaire à la plus grande dimension de leur section transversale, sont deux lames torsibles autour de leur axe longitudinal respectif, de sorte que la partie d'emplanture 24 soit, dans son ensemble, torsible autour d'un axe longitudinal sensiblement parallèle ou confondu à l'axe longitudinal de la pale. Cette partie d'emplanture 24 porte, à son extrémité libre, du côté opposé à la coque de la pale, une attache feuilletée 34, dont les éléments feuilletés supérieur 34a, inférieur 34b et intercalaire 34c, de la même structure feuilletée que les éléments feuilletés de l'attache 14 de la pale de la figure 1, sont solidarisés par la rigidification de la ou des résines d'agglomération aux portions d'extrémité de liaison 33a et 33b des deux lames torsibles 32a et 32b.

A la différence de l'attache feuilletée 14 de la figure 1, les éléments feuilletés 34a, 34b et 34c de l'attache feuilletée 34 présentent une forme en plan sensiblement carrée ou rectangulaire, dont la largeur, considérée perpendiculairement à la direction longitudinale des lames 32a et 32b, est supérieure à la largeur de ces lames, de sorte que l'attache feuilletée 34 soit bien évasée latéralement des deux côtés par rapport aux lames 32a et 32b. Bien entendu, des éléments feuilletés de remplissage latéral sont avantageusement disposés, dans cet exemple également, contre les deux faces latérales des portions d'extrémité de liaison 33a et 33b des deux lames, et entre les deux éléments feuilletés 34a et 34c ou 34c et 34b entre lesquels chaque portion d'extrémité 33a ou 33b est solidarisée et prise en sandwich.

Deux évidements cylindriques 35 sont ménagés en superposition dans les trois éléments feuilletés 34a, 34b, 34c, symétriquement de part et d'autre de l'axe longitudinal des lames 32a et 32b, et en correspondance avec des évidements hémi-cylindriques ménagés dans les éléments feuilletés de remplissage latéral, ainsi qu'avec des évidements de même forme ménagés latéralement dans les lames 32a et 32b, ou en correspondance avec des rétrécissements transversaux de ces lames, de sorte que l'attache feuilletée 34 et les portions d'extrémité de liaison 33a et 33b dont elle est solidaire puissent être encastrées et retenues dans une chape radiale s'ouvrant vers l'extérieur et délimitée sur un moyeu 36 par deux plateaux 37 et 38 de ce moyeu. La retenue de l'attache feuilletée 34 et de la partie d'emplanture 24 est assurée par deux goupilles ou axes parallèles 39 qui traversent les évidements cylindriques 35 des éléments feuilletés de l'attache 34 ainsi que les évidements ou rétrécissements des éléments de remplissage latéral et des deux portions d'extrémité de liaison 33a et 33b, et des perçages coaxiaux ménagés dans les plateaux radiaux 37 et 38 du moyeu 36.

Le caractère démontable de la partie d'emplanture 24 et de son attache feuilletée 34 sur le moyeu 36 est facilement obtenu si les goupilles ou axes de retenue 39 sont constitués par les tiges de boulons en appui par leur tête 39a contre la face supérieure du plateau radial supérieur 37 du moyeu 36, tandis qu'un écrou 40 est vissé sur l'extrémité filetée 39b des écrous 39 qui fait saillie sous la face inférieure du plateau radial inférieur 38 du moyeu 36, l'écrou 40 étant serré contre ce plateau inférieur 38.

Ainsi, la pale comportant la partie d'emplanture 24 est reliée au moyeu 36 par un dispositif de liaison pale-moyeu qui comprend, d'une part, l'attache feuilletée 34 solidaire de la partie d'emplanture 24 de la pale, et, d'autre part, les deux goupilles ou axes démontables 39, solidarisés de manière amovible au moyeu 36, et constituant des moyens de retenue de l'attache feuilletée 34 et de la pale correspondante au moyeu 36, en étant disposés de part et d'autre des lames torsibles 32a et 32b d'attache de pale, au niveau de leurs portions d'extrémité de liaison 33a et 33b à l'attache feuilletée 34, dont la forme est telle qu'elle s'appuie contre les deux goupilles 39.

En service, les forces centrifuges qui sollicitent la pale induisent, dans sa partie d'emplanture 24, des efforts axiaux dans les faisceaux torsibles 32a et 32b, ce qui conduit l'ensemble solidaire de l'attache feuilletée 34 et des portions d'extrémité de liaison 33a et 33b des faisceaux 32a et 32b à venir en butée, vers la coque, contre les goupilles 39 constituant les moyens de retenue de l'attache feuilletée 34 et de la pale au moyeu 36. La transmission dans le moyeu 36 des efforts venant des faisceaux torsibles 32a et 32b de la partie d'emplanture 24 s'effectue successivement à deux niveaux. Le transfert des efforts axiaux des faisceaux torsibles 32a et 32b dans les couches de fibres des éléments feuilletés 34a, 34b et 34c de l'attache feuilletée 34 s'effectue par cisaillement des interfaces de liaison entre les faisceaux 32a et 32b, et en particulier leurs portions d'extrémité de liaison 33a et 33b, et les couches de fibres des éléments feuilletés. C'est pour cette raison qu'il est indiqué que les couches de fibres des éléments feuilletés soient des couches de tissus dont les fibres sont orientées selon les directions de la trame et de la chaîne, qui sont inclinées sensiblement à 45° sur l'axe longitudinal des faisceaux 32a et 32b, ce qui assure un comportement optimum de ces couches de fibres pour la tenue en cisaillement. Pour cette raison également il est intéressant que les éléments feuilletés de remplissage latéral soient également constitués d'un empilage de couches de tissus de fibres dont les directions de la trame et de la chaîne sont inclinées de la même manière.

Au second niveau, le transfert des efforts des couches de fibres des éléments feuilletés de l'attache 34 dans les goupilles 39 de retenue au moyeu 36 s'effectue par cisaillement, traction et compression dans les couches de fibres.

Sur la figure 2, on a indiqué en 25 les plans de cisaillement au niveau des interfaces entre les portions d'extrémité de liaison 33a, 33b des lames torsibles 32a et 32b et les éléments feuilletés de l'attache 34, tandis que sur la figure 3 on a indiqué respectivement en 26, 27 et 28 les plans de cisaillement, zones de compression et plan de traction dans la transmission des efforts des éléments feuilletés de l'attache 34 au moyeu 36 par les deux goupilles 39 situées de part et d'autre des faisceaux torsibles 32a et 32b.

Il est clair que la pale 1 de la figure 1 peut être montée sur un moyeu tel que 36 sur la figure 2, de la même manière, si les faces latérales ou bords latéraux concaves 15 et 18 des éléments feuilletés de l'attache 14 présentent des faces d'appui de formes complémentaires à des parties des surfaces périphériques des goupilles 39 contre lesquelles ces faces d'appui viennent en butée, c'est-à-dire si les faces concaves 15 et 18 sont par exemple en forme de quart de surface latérale cylindrique de sensiblement même rayon que les goupilles cylindriques 39 de retenue au moyeu 36. En outre, dans ce cas, il suffit que l'une des goupilles 39 soit démontable pour permettre, éventuellement, la dépose de la pale correspondante par désencastrement de son attache feuilletée hors de la chape de retenue sur le moyeu.

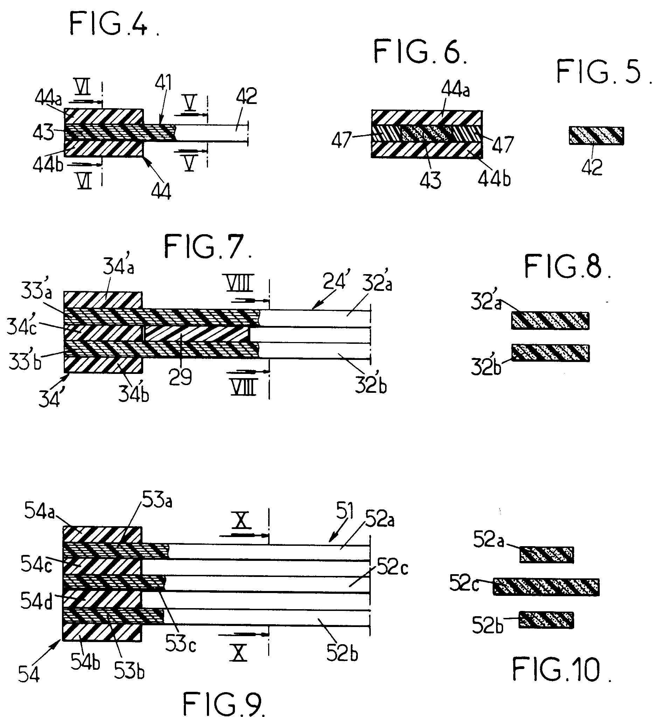

Sur les figures 4, 5 et 6 on a représenté schématiquement une partie d'emplanture de pale 41 mono-faisceau, qui est constituée d'une unique lame torsible 42 prolongeant le longeron de pale hors de la coque de cette dernière. Dans cette variante monolame des parties d'emplanture multi-faisceaux ou multi-lames des figures 1 et 2, l'attache feuilletée 44 comprend un élément feuilleté supérieur 44a et un élément feuilleté inférieur 44b entre lesquels est prise en sandwich et solidarisée par la résine d'agglomération rigidifiée, la portion d'extrémité de liaison 43 de l'unique lame torsible 42. Comme représenté sur la figure 6, l'attache feuilletée 44 comprend également des éléments feuilletés de remplissage latéral 47, dont chacun est solidarisé par la résine rigidifiée à une face latérale de la lame 42 ainsi qu'aux parties latérales en saillie par rapport à cette lame 42 des deux éléments feuilletés 44a et 44b.

Sur les figures 7 et 8, on a représenté une variante de la réalisation de la figure 2, dans la mesure où la partie d'emplanture de pale 24' conserve une structure multi-faisceaux à deux lames 32'a et 32'b de section transversale identique et rectangulaire, dont les portions d'extrémité de liaisons 33'a et 33'b sont prises en sandwich et solidarisées entre les éléments feuilletés 34'a, 34'c, 34'b de l'attache feuilletée 34'. Mais en outre, afin de garantir un bon positionnement relatif des deux lames 32'a et 32'b pendant le procédé de fabrication de la pale, et en particulier pendant la phase de rigidification de la ou des résines d'agglomération de tous les éléments constitutifs de la partie d'emplanture 24' et de son attache feuilletée 34', un élément intercalaire 29, réalisé par exemple en élastomère, est prévu à demeure entre les parties des deux lames torsibles 32'a et 32'b qui sont adjacentes à leurs portions d'extrémité de liaison 33'a et 33'b. Cet élément intercalaire 29 fait non seulement office d'outillage de positionnement pendant le procédé de fabrication, mais peut également faire office d'amortisseur de torsion, lorsque les deux lames 32'a et 32'b sont sollicitées en torsion autour de leur axe longitudinal, afin d'empêcher tout contact des deux lames entre elles, ce qui pourrait provoquer un délaminage le long de l'arête de contact. Pour la même raison, l'élément feuilleté intercalaire 34'c de l'attache 34' est suffisamment épais pour empêcher tout contact entre les deux lames 32'a et 32'b en cas de torsion de la partie d'emplanture 24'.

Sur les figures 9 et 10 on a représenté une partie d'emplanture de pale 51 multi-faisceaux, à trois lames, torsibles de sections différentes, qui proviennent toutes les trois de la subdivision d'un même faisceau formant un unique longeron de pale. Dans cette variante, les lames supérieure 52a et inférieure 52b sont des lames rectangulaires de sections transversales identiques disposées avec espacement de part et d'autre d'une lame centrale 52c de plus grande section rectangulaire que les deux autres, bien qu'ayant sensiblement la même épaisseur. Les portions d'extrémité de liaison 53a, 53b et 53c de ces trois lames sont chacune prises en sandwich et solidarisées entre deux des quatre éléments feuilletés 54a, 54b, 54c, 54d de l'attache feuilletée 54, dont les éléments 54c et 54d sont intercalaires.

Dans les variantes décrites sur les figures 4 à 10, il doit être compris que l'attache feuilletée correspondante présente toujours des parties en saillie latérale des deux côtés par rapport à la lame ou aux lames torsibles de la partie d'emplanture, afin que, de par sa forme, cette attache feuilletée puisse toujours venir en butée, vers la coque de la pale correspondante, contre des organes de retenue sur le moyeu telles que les goupilles 39 sur la figure 2.

Bien entendu, de nombreuses autres structures multi-lames ou multi-faisceaux de sections identiques ou différentes sont possibles pour la partie d'emplanture. Mais lorsque le ou les faisceaux de la partie d'emplanture n'ont pas la forme d'une lame, il est néanmoins préférable que leurs portions d'extrémité de liaison soient sensiblement aplaties afin de pouvoir être favorablement intégrées dans la structure feuilletée de l'attache correspondante.

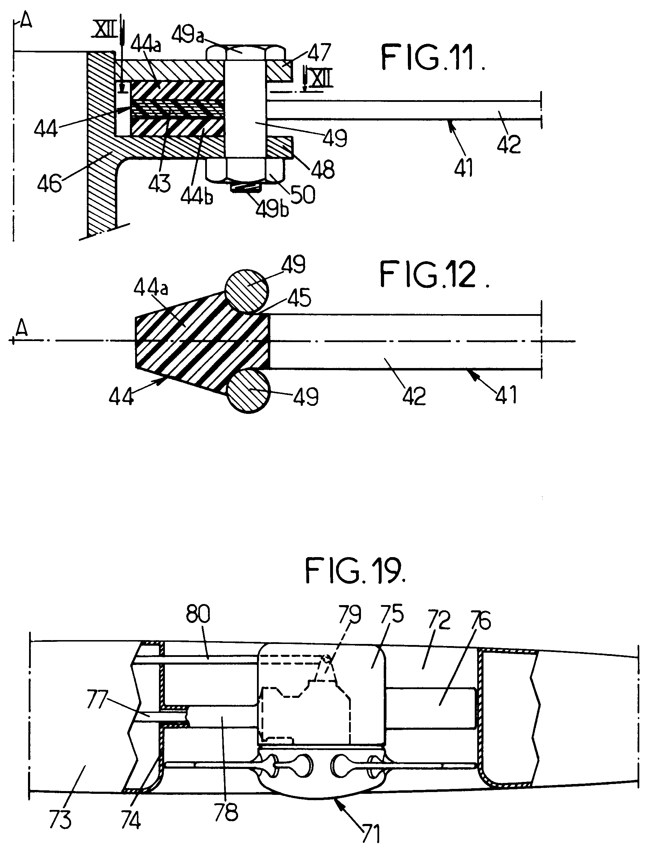

Sur les figures 11 et 12 on a représenté schématiquement la liaison au moyeu 46 de la partie d'emplanture de pale 41 des figures 4 à 6, dont les deux éléments feuilletés 44a et 44b de l'attache 44 correspondante présentent, en plan, la forme des éléments feuilletés de l'attache 14 de la figure 1 de chaque côté de l'unique lame torsible 42, dont la portion d'extrémité de liaison 43 est prise en sandwich et solidarisée entre les éléments feuilletés 44a et 44b de l'attache 44. Cette dernière présente une partie évasée en saillie latérale, délimitée de chaque côté par une face latérale concave 45, en forme de quart de surface latérale cylindrique, prolongée par une face latérale plane et convergente vers l'axe longitudinal de la lame 42 et du côté opposé à cette dernière. L'attache feuilletée 44 et la partie d'extrémité de liaison 43 de la lame 42 peuvent ainsi être encastrées dans une chape délimitée entre un plateau radial inférieur 48, en forme de disque annulaire solidaire du corps de moyeu tubulaire 46, et un plateau supérieur 47, également en forme de disque annulaire, monté coulissant autour du corps de moyeu 46. Le plateau radial supérieur 47 est solidarisé au moyeu 46, et l'attache 44 et la partie d'extrémité 43 sont retenues dans la chape ainsi définie par deux boulons 49, traversant chacun deux trous coaxiaux ménagés l'un dans le plateau supérieur 47 et l'autre dans le plateau inférieur 48, et contre lesquels l'attache feuilletée 44 vient en butée par les faces latérales concaves 45 en appui contre les parties correspondantes de la périphérie des boulons 49. Ces derniers sont en appui par leur tête 49a contre la face supérieure du plateau supérieur 47 et reçoivent, sur leur extrémité filetée 49b en saillie sous le plateau inférieur 48, un écrou 50, dont le vissage permet d'assurer l'encastrement de l'attache feuilletée 44 entre les deux plateaux 47 et 48, tout en solidarisant le plateau supérieur 47 au reste du moyeu.

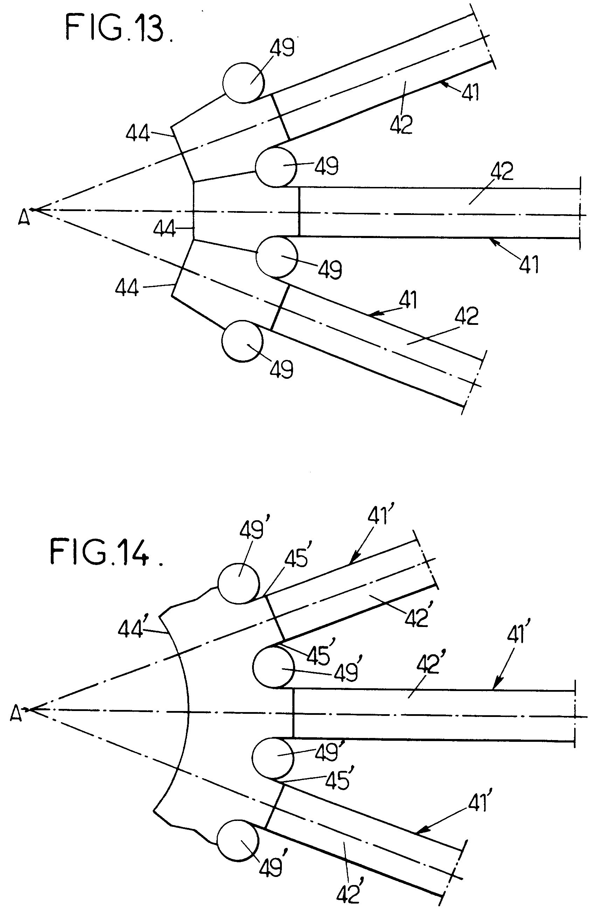

Lorsque les attaches feuilletées ont la forme représentée sur les figures 1 et 12, avec une partie d'extrémité, du côté opposé au(x) faisceau(x) torsible(s), qui présente une forme en plan trapézoïdale à côtés inclinés convergents vers l'axe de rotation du rotor sur lequel les pales correspondantes sont montées, il est possible d'associer avantageusement côte-à-côte les attaches feuilletées et les faisceaux torsibles de plusieurs pales voisines. Deux variantes de ce type sont schématiquement représentées sur les figures 13 et 14.

Sur la figure 13, on a représenté les parties d'emplanture 41 à une seule lame torsible 42 solidaire d'une attache feuilletée 44 de trois pales voisines d'un rotor multi-pales. Grâce à la forme trapézoïdale donnée en plan à la partie d'extrémité de chaque attache feuilletée 44, du côté opposé à la lame 42 correspondante, et en raison de la condition géométrique selon laquelle les côtés inclinés opposés de cette partie trapézoïdale convergent l'un vers l'autre de sorte que leurs prolongements se coupent au niveau de l'axe A de rotation du rotor, les attaches feuilletées 44 des trois pales peuvent être accolées côte-à-côte par leurs faces latérales, au niveau de ces parties trapézoïdales, et deux attaches feuilletées 44 ainsi accolées prennent appui par les parties concaves en regard de leurs faces latérales, contre une même goupille 49 de retenue sur le moyeu du rotor. Ainsi, les attaches feuilletées 44 liées à deux pales adjacentes sont en butée contre un moyen de retenue commun. Si les attaches feuilletées 44 de toutes les pales du rotor sont ainsi accolées deux à deux par leurs faces latérales, le nombre des goupilles 49 de retenue de l'ensemble des pales sur le moyeu est égal au nombre des pales, et un excellent positionnement radial des pales est assuré par le maintien, vers l'extérieur, des attaches feuilletées en butée contre les goupilles de retenue 49, tandis que, radialement vers l'intérieur, les attaches feuilletées 44 sont bloquées par la forme en coin que leur donne leurs parties trapézoïdales. En outre, un tel montage préserve le caractère individuellement démontable de chaque pale.

Sur la figure 14, comme sur la figure 13, les faisceaux torsibles 42' des parties d'emplanture 41' de plusieurs pales voisines du rotor sont disposés de sorte que leurs axes longitudinaux se coupent sur l'axe du rotor A. Mais, à la différence de la réalisation de la figure 13, les attaches feuilletées des différentes pales considérées sont constituées par une seule et unique attache feuilletée 44', simultanément solidarisée à toutes les portions d'extrémité de liaison des différents faisceaux 42' des pales considérées, qui peuvent être quelques pales voisines du rotor ou toutes les pales de ce dernier.

Lorsque toutes les pales du rotor sont liées par leur partie d'emplanture 41' à une même attache feuilletée 44', cette dernière a la forme d'un disque annulaire complet, constitué par la superposition d'éléments feuilletés supérieur, inférieur, et, éventuellement, intercalaire(s) lorsque chaque partie d'emplanture 41' comporte plusieurs faisceaux torsibles 42', les portions d'extrémité de liaison des faisceaux 42' étant chacune prise en sandwich et solidarisée entre deux éléments feuilletés adjacents de l'attache 44', et chacun des éléments feuilletés comprenant lui-même un empilement de couches de tissus de fibres en forme de disques annulaires pré-imprégnés d'une résine synthétique d'agglomération rigidifiée, des éléments feuilletés de remplissage latéral remplissant les espaces délimités, latéralement ou en direction circonférentielle autour de l'axe de rotation A du rotor, entre les portions d'extrémité de liaison de deux faisceaux 42' voisins de deux pales adjacentes, et, axialement ou selon l'épaisseur de l'attache 44', entre deux éléments feuilletés voisins en forme de disques annulaires.

Dans sa périphérie radiale externe, le disque annulaire de l'attache 44' présente des évidements concaves 45', ouverts radialement vers l'extérieur, et de forme sensiblement hémi-cylindrique, qui délimitent des surfaces d'appui de l'attache feuilletée 44' en butée radiale vers l'extérieur, contre des goupilles 49' de retenue de l'attache 44' sur le moyeu.

Dans cet exemple, l'attache feuilletée 44', commune à toutes les pales, assure un certain équilibrage des efforts, notamment centrifuges, qui sollicitent les différentes pales, et le nombre des goupilles de retenue 49' est égal au nombre des pales.

Mais il est également possible que l'attache feuilletée 44' ne soit commune qu'à quelques pales voisines du rotor. Dans ce cas, elle est constituée d'une portion seulement du disque annulaire décrit ci-dessus, et s'étend en direction circonférentielle sur un secteur angulaire délimité entre deux plans radiaux, passant chacun par l'axe A de rotation du rotor et par l'axe de l'une respectivement des deux goupilles cylindriques 49', qui sont disposées de part et d'autre de l'ensemble des pales voisines considérées.

Avantageusement, les pales du rotor sont alors regroupées en sous-ensembles comprenant chacun le même nombre de pales, de sorte que les attaches feuilletées correspondantes s'étendent sur des portions identiques de disque annulaire, et que leur disposition côte-à-côte autour de l'axe A du rotor reconstitue un disque annulaire complet.

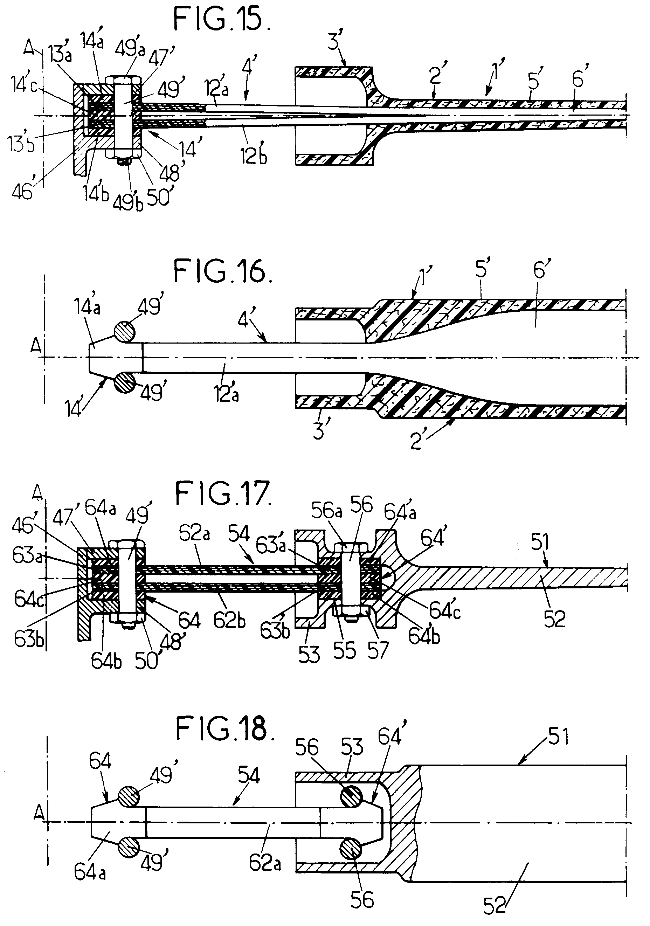

Dans les réalisations de la figure 14, il est avantageux que le caractère individuellement démontable de chaque pale soit préservé au niveau d'une liaison amovible de sa partie d'emplanture 41' avec le reste de la pale, comme décrit par exemple ci-dessous en référence aux figures 17 et 18.

Sur les figures 15 et 16, on a représenté schématiquement une pale 1', de structure très voisine de celle de la pale 1 de la figure 1, ainsi que son montage sur un moyeu, dont la structure est analogue à celle du moyeu de la figure 11.

Tout comme la pale 1 de la figure 1, la pale 1' des figures 15 et 16 est une pale essentiellement en composites, dont la partie d'emplanture 4', multi-faisceaux à deux lames torsibles 12'a et 12'b de sections rectangulaires identiques, est intégrée à l'ossature résistante de la pale 1'.

A ce niveau, la seule différence essentielle entre les deux pales 1 et 1' est que l'ossature résistante de la pale 1' est constituée d'un longeron 6' en forme de faisceau de stratifils unidirectionnels et longitudinaux, agglomérés par une résine rigidifiée, et qui est épanoui dans la coque rigide en composite 5', dans une direction s'étendant sensiblement selon la corde de la pale 1'.

Ce faisceau épanoui 6' se concentre vers l'axe longitudinal de la pale 1' au voisinage du pied de pale tubulaire 3', sensiblement cylindrique, et est subdivisé à ce niveau en deux moitiés formant les deux lames torsibles 12'a et 12'b, qui s'écartent progressivement l'une de l'autre en traversant le pied de pale 3', et jusqu'à l'attache feuilletée 14', laquelle est de structure identique à celle de l'attache feuilletée 14 de la pale de la figure 1, et est solidarisée de la même manière aux portions d'extrémité de liaison 13'a et 13'b des deux lames torsibles 12'a et 12'b.

Dans la partie courante 2' de la pale 1', le ou les volumes internes à la coque 5' non occupé(s) par le longeron 6' est ou sont de préférence occupé(s) par au moins un corps de remplissage, disposé entre le longeron 6' et la coque 5'.

Concernant la liaison au moyeu, l'attache feuilletée 14' et les portions d'extrémité de liaison 13'a et 13'b des lames torsibles qui lui sont solidaires, la première entre les éléments feuilletés supérieur 14'a et intercalaire 14'c de l'attache 14', et, la seconde, entre les éléments feuilletés intercalaire 14'c et inférieur 14'b de cette attache 14', sont encastrées et retenues dans une chape radiale, ouverte vers l'extérieur, sur le moyeu. Ce dernier est constitué d'un corps de moyeu central tubulaire 46', d'axe confondu avec l'axe de rotation A du rotor, et dont est solidaire un plateau de moyeu radial inférieur 48'. Le moyeu comporte également un plateau de moyeu radial supérieur 47' qui est une pièce annulaire d'axe A et montée mobile axialement autour du corps 46'. Ce plateau supérieur 47' est retenu sur le corps 46' et son plateau inférieur 48' par des paires d'ensembles vis-écrou, comprenant chacun un boulon 49' à tête 49'a appliquée contre la face supérieure du plateau supérieur 47', et dont l'extrémité filetée 49'b de la tige fait saillie sous le plateau inférieur 48', et reçoit un écrou 50' vissé sur elle. Comme dans l'exemple des figures 11 et 12, l'attache feuilletée 14' est en butée, radialement vers l'extérieur, contre les tiges des boulons 49' par les évidements concaves sensiblement hémi-cylindriques des parties latérales des éléments feuilletés 14'a, 14'b et 14'c, en saillie latérale des deux côtés par rapport aux lames torsibles 12'a et 12'b.

Sur les figures 17 et 18, on a représenté schématiquement une pale métallique 51, munie d'une partie d'emplanture 54 dont la structure est indépendante de l'ossature résistante de la pale 51, mais qui se raccorde à la pale 51 par des moyens de liaison amovible. Pour simplifier la représentation de cette pale, sur la figure 17 son longeron métallique occupe toute l'épaisseur de sa coque, qui se prolonge du côté de la partie d'emplanture 54 par un pied de pale 53 tubulaire à fond fermé du côté de la partie courante 52 de cette pale.

La partie d'emplanture 54 comprend deux faisceaux en composite, allongés et torsibles 62a et 62b, qui sont constitués par deux lames identiques, disposées l'une au-dessus de l'autre mais écartées l'une de l'autre et parallèles, ayant une section transversale rectangulaire dont la plus grande dimension de section est orientée de l'avant vers l'arrière de la pale, perpendiculairement à son axe longitudinal. Chaque lame est constituée d'un faisceau indépendant de stratifils unidirectionnels et longitudinaux de fibres minérales ou organiques agglomérés par une résine synthétique de rigidification.

Par leurs portions d'extrémité de liaison 63a et 63b, du côté opposé au pied de pale 53, les deux lames torsibles 62a et 62b sont solidaires d'une même attache feuilletée 64, dont la structure est analogue à celle de l'attache feuilletée 14' des figures 15 et 16, et reliée de la même manière et par les mêmes moyens à un moyeu de rotor. On retrouve donc que la portion d'extrémité de liaison 63a de la lame supérieure 62a est prise en sandwich et solidarisée entre les éléments feuilletés supérieur 64a et intercalaire 64c de l'attache 64, et que la portion d'extrémité de liaison 63b de la lame inférieure 62b est de la même manière prise en sandwich et solidarisée entre les éléments feuilletés intercalaire 64c et inférieur 64b de cette attache 64, laquelle est encastrée dans la chape formée sur le corps de moyeu 46' par les plateaux de moyeu inférieur 48' et supérieur 47', ce dernier étant relié au reste du moyeu par des boulons 49' et des écrous 50' de fixation, l'attache feuilletée 64 venant en butée radiale vers l'extérieur contre les tiges de ces boulons 49'.

Par leurs portions d'extrémité 63'a et 63'b, qui sont du côté du pied de pale 53, et qui servent de portions d'extrémité de liaison à ce pied de pale 53, les deux lames torsibles 62a et 62b sont également solidaires d'une seconde attache feuilletée 64', d'une structure tout à fait analogue à celle de l'attache feuilletée 64, mais réalisée symétriquement à cette dernière par rapport au centre de la partie d'emplanture 54. Plus précisément, cette seconde attache feuilletée 64' comprend trois éléments feuilletés 64'a, 64'b, 64'c, dont chacun est constitué d'un empilement de plusieurs couches de fibres minérales ou organiques, agglomérées par une résine synthétique de rigidification, et tels que les portions 63'a et 63'b d'extrémité de liaison à la pale 51 des lames torsibles 62a et 62b sont prises en sandwich et solidarisées, la première entre les éléments feuilletés supérieur 64'a et intercalaire 64'c, et la seconde entre les éléments feuilletés intercalaire 64'c et inférieur 64'b.

Cette seconde attache feuilletée 64' et les portions d'extrémité des lames torsibles 62a et 62b qui lui sont solidaires sont encastrées dans une chape délimitée dans le pied de pale tubulaire 53 par une partie centrale resserrée 55 de ce pied de pale 53. L'attache feuilletée 64' de liaison amovible à la pale 51 est retenue dans cette chape 55 par une paire d'ensembles vis-écrou, comprenant des boulons 56, dont chacun traverse des perçages coaxiaux ménagés dans les deux parties en regard de la chape 55, et est en appui par sa tête 56a contre la partie supérieure de cette chape 55, tandis qu'un écrou 57 est vissé sur l'extrémité filetée de sa tige qui fait saillie sous la partie inférieure de cette chape 55. Comme les éléments feuilletés de l'attache 64' présentent la même forme en plan que les éléments feuilletés de l'attache 64, avec des parties en saillies latérales des deux côtés par rapport aux deux lames 62a, 62b, et délimitées par des évidements concaves, à concavité tournée vers l'extérieur du faisceau, l'attache feuilletée 64' est retenue en butée radiale vers le moyeu 46' contre les tiges de ces boulons 56.

Des deux boulons 56 ou goupilles de retenue de la seconde attache feuilletée 64' dans la chape 55 du pied de pale 63, il est nécessaire que l'un au moins soit monté de manière amovible pour pouvoir déposer la pale 51 par désolidarisation entre son pied de pale 53, intégré dans cet exemple à l'ossature résistante de la pale, et l'extrémité radiale externe, par rapport à l'axe de rotation du moyeu, de sa partie d'emplanture 54.

Dans une telle réalisation, chacune des deux attaches feuilletées 64 et 64' présente ainsi une portion évasée par laquelle elle prend appui contre les moyens qui la retiennent respectivement sur le moyeu et dans le pied de pale.

Les pales et les dispositifs de liaison pale-moyeu décrits ci-dessus en référence aux figures 1 à 18 trouvent avantageusement application à l'équipement des rotors multi-pales, à pas variable, utilisés comme rotors arrière carénés sur les hélicoptères.

Un exemple particulier d'un tel rotor arrière caréné est décrit ci-dessous en référence aux figures 19 à 21.

Sur la figure 19, le rotor multi-pales, utilisé comme rotor arrière anti-couple, est désigné dans son ensemble par 71. Ce rotor arrière 71 est monté et entraîné en rotation dans une veine ou fenêtre sensiblement verticale 72, dont la forme de la section transversale est légèrement tronconique, et qui est délimitée dans la partie arrière du fuselage ou de l'empennage 73 d'un hélicoptère par un carénage 74. Dans la veine 72, le rotor 71 est supporté et entraîné par une boîte de transmission auxiliaire 75, logée dans un carter à double parois, de forme générale cylindrique, maintenu au centre de la veine 72 par un support comportant plusieurs bras radiaux carénés 76. La boîte de transmission auxiliaire 75, qui est, par exemple, telle que celle décrite et représentée dans le brevet français FR-1 593 008, auquel on se reportera avantageusement pour plus de précisions, renferme un engrenage conique, dont le pignon primaire est entraîné par un arbre de transmission 77, reliant la boîte de transmission principale à la boîte de transmission auxiliaire 75, et traversant un bras creux 78 reliant le carénage 74 au carter de la boîte de transmission auxiliaire 75. Cette dernière renferme également un renvoi d'angle 79, sollicité par une bielle 80 de commande collective du pas des pales du rotor 71, afin de déplacer, parallèlement à l'axe de la veine 72, un arbre de commande collective de pas décrit ci-après. Le renvoi d'angle 79 et la bielle 80 ont été schématiquement représentés comme sur la figure 1 du brevet précité, dans un but de clarté, mais la bielle 80 peut éventuellement traverser également le bras creux 78.

En référence aux figures 20 et 21, le rotor 71 comprend un arbre central tubulaire 81, sensiblement coaxial à la veine 72, et monté en rotation autour de l'axe A de la veine 72 par des roulements, tels que 82, logés dans la boîte de transmission auxiliaire 75. L'arbre 81 est entraîné en rotation, de manière non représentée, par des cannelures axiales externes d'une partie d'arbre 81 reçue dans le carter de la boîte de transmission auxiliaire 75, et qui sont en prise avec des cannelures correspondantes du pignon conique secondaire de l'engrenage conique logé dans cette boîte de transmission 75, ce pignon secondaire étant lui-même monté en rotation dans la boîte 75 de manière appropriée, par exemple par un roulement à rouleaux. Dans sa partie sortant de la boîte 75, l'arbre 81 présente d'autres cannelures axiales externes 83, par lesquelles l'arbre 81 est en prise avec des cannelures axiales internes correspondantes 84 d'un manchon d'entraînement 85, en appui axial par son extrémité axiale interne (c'est-à-dire tournée vers la boîte 75) contre un épaulement radial externe 86 de l'arbre 81. Ce manchon 85, ainsi solidaire en rotation de l'arbre 81, est coaxial à ce dernier grâce notamment à une portée d'appui cylindrique interne 87, au niveau de laquelle ce manchon 85 présente une bride annulaire radiale externe 88, par laquelle le manchon 85 est fixé à un moyeu décrit ci-après, et auquel le manchon 85 transmet le couple moteur reçu de l'arbre 81, lequel le reçoit du pignon conique.

Comme dans le brevet FR-2 542 695 précité, le moyeu a sensiblement la forme d'un moule à gâteaux circulaire muni d'une cheminée centrale. Ce moyeu comprend un corps de moyeu 89, métallique, par exemple en tôle emboutie, ou en matériaux composites, par exemple en un matériau synthétique injecté et renforcé de fibres, ayant la forme d'une cuvette dont le fond est constitué d'une partie annulaire, en position radiale externe, qui est légèrement tronconique 90, raccordée par une partie intermédiaire 91, également tronconique, et dirigée vers l'intérieur de la cuvette, à un plateau radial interne annulaire et plan 92 entourant une ouverture centrale de diamètre supérieur au diamètre externe de l'arbre 81, de sorte que le corps 89 peut être glissé axialement autour de cet arbre 81, jusqu'à venir reposer par le plateau 92 contre la bride 88 du manchon 85. Le corps 89 comprend également deux parois cylindriques coaxiales l'une à l'autre, dont l'une 93, en position radiale externe et se raccordant par son extrémité axiale interne à l'extrémité radiale externe de la partie 90 du fond, est d'une hauteur supérieure à celle de l'autre paroi cylindrique 94, en position radiale interne et se raccordant par son extrémité axiale interne à la partie intermédiaire 91 du fond. Dans ces deux parois 93 et 94 sont percées, pour chacune des pales du rotor, deux ouvertures circulaires 95 et 96 coaxiales, centrées sur un axe radial, et telles que l'ouverture 95 dans la paroi externe 93 est d'un diamètre supérieur au diamètre de l'ouverture 96 dans la paroi interne 94. Deux bagues auto-lubrifiantes 97 et 98 sont montées respectivement dans les ouvertures 95 et 96, et retenues dans ces dernières, dont elles chevauchent les bords, le diamètre interne de la bague 97 étant supérieur à celui de la bague 98.

Le rotor comporte également huit pales, qui sont chacune identiques à la pale 1 de la figure 1. A titre d'exemple, dans une veine 72 d'environ 850 mm de diamètre, le rotor 71, entraîné à une vitesse de rotation de l'ordre de 4500 t/mn, à partir de l'arbre 77 ayant une vitesse de rotation de l'ordre de 6000 t/mn, est équipé de huit pales dont chacune a une longueur de l'ordre de 400 mm, du bout de la pale, à son extrémité radiale externe, jusqu'à l'extrémité libre de l'attache feuilletée 14, à son extrémité radiale interne, chaque pale ayant une corde de l'ordre de 60 à 66 millimètres.

Par rapport à la pale 1 représentée sur la figure 1, la structure de chaque pale du rotor 71 est complétée par un manchon de commande de pas 20, monté autour de son pied de pale 3. Ce manchon 20, métallique ou en composite, comprend essentiellement deux parties tubulaires 21 et 22, coaxiales, de section circulaire ayant des diamètres interne et externe différents, et reliées par une partie centrale tronconique 23. La partie tubulaire 21, en position radiale externe (par rapport à l'axe de rotation A du rotor 71) et de plus grand diamètre, coiffe le pied de pale 3 et est fixée à ce dernier, par exemple par collage, afin de solidariser le manchon 20 au pied de pale 3. Autour de son extrémité radiale externe, cette partie 21 du manchon 20 présente une collerette 21a montée tourillonnante dans la bague 97. De même, autour de son extrémité radiale interne, la partie 22 de plus petit diamètre et en position radiale interne sur le manchon 20, présente une collerette 22a montée tourillonnante dans la bague 98. Cette partie 22 du manchon 20 comporte également un maneton latéral 22b, en saillie vers l'extérieur du manchon 20, dans une direction sensiblement perpendiculaire à la fois à l'axe du manchon 20 et à l'axe A de rotation du rotor 71.

Les dimensions et l'encombrement du manchon 20 et de son maneton latéral 22b sont tels qu'en inclinant convenablement une pale et son manchon 20, après avoir introduit l'extrémité radiale interne de sa partie d'emplanture 4 et l'attache feuilletée 14 correspondante ainsi que la partie 22 du manchon 20 dans une ouverture 95 de la paroi externe 93 du moyeu, il est possible de faire passer le maneton latéral 22b dans cette ouverture 95, puis d'engager la partie 22 du manchon 20 dans l'ouverture 96 correspondante et de positionner le manchon 20 de telle sorte que ses collerettes d'extrémité 21a et 22a viennent respectivement en appui tourillonnant à l'intérieur des bagues 97 et 98 des ouvertures 95 et 96.

Dans cette position de la pale, l'attache feuilletée 14 à l'extrémité radiale interne de sa partie d'emplanture 4 est reçue entre le plateau 92 du moyeu 89 et un plateau externe métallique 99, en position axiale externe par rapport à ce plateau 92, ce plateau 99 pouvant être réalisé sous la forme d'un disque annulaire entourant, avec un jeu radial, l'arbre d'entraînement 81.

La pale est alors reliée au corps 89 par l'attache feuilletée 14 de sa partie d'emplanture 4, de la manière déjà décrite ci-dessus en référence aux figures 11 à 13 et 15 à 18. Le plateau 99 est rattaché au corps 89, en même temps que ce dernier est fixé à la bride 88 du manchon 85, par des paires de boulons 100, appliqués par leur tête 100a contre la face axiale interne de la bride 88 du manchon 85, et par des écrous 101, vissés chacun sur l'extrémité filetée 100b de la tige d'un boulon 100 qui fait saillie sur la face axiale externe du plateau 99, les tiges des boulons 100 traversant axialement des perçages alignés de la bride 88, du plateau 92 du corps 89, et du plateau 99. De la sorte, ce dernier et le plateau 92 constituent une chape radiale ouverte vers l'extérieur, et dans laquelle est encastrée l'attache feuilletée 14. Par les faces latérales concaves, telles que 15 et 18 sur la figure 1, des éléments feuilletés 14a, 14b, 14c, 17a et 17b de l'attache feuilletée 14, cette dernière est en appui radial vers l'extérieur contre les faces latérales des tiges de deux boulons 100, disposées latéralement de part et d'autre des deux portions d'extrémité de liaison 13a et 13b des deux lames torsibles 12a et 12b de la partie d'emplanture 4 de la pale. Ces boulons 100 constituent ainsi des goupilles amovibles de retenue de la pale sur le corps 89, le démontage de ces goupilles permettant la dépose indépendante de la pale considérée et son remontage sur le moyeu.

Un flasque annulaire 102 a son ouverture centrale qui présente un filetage femelle par lequel ce flasque vient se visser sur un filetage mâle correspondant 103 ménagé sur l'extrémité de l'arbre 81, de sorte que ce flasque 102 soit solidarisé axialement avec l'arbre 81. Ce flasque 102 est percé d'alésages axiaux taraudés dans lesquels sont vissées des vis de calage 104, dont l'extrémité de la tige, en forme de téton d'appui 104a, est engagée dans un évidement de la face axiale externe du plateau ou disque 99, et appliquée contre une surface d'appui du fond de cet évidement. Ce montage améliore l'encastrement des attaches feuilletées 14 entre les plateaux 92 et 99. En effet, les vis 104 constituent alors des vis de pression, dont les tiges prennent appui contre le disque 99 pour le plaquer vers le plateau 92 du corps 89 et contre les attaches feuilletées 14 des pales, afin de compléter leur encastrement entre disque 99 et plateau 92, et afin d'assurer un bon calage axial de l'empilement du disque 99, des attaches feuilletées 14, du corps 89 et du manchon 85.

En outre, lorsque chaque pale est convenablement disposée dans le moyeu 89, de sorte que les collerettes 21a et 22a du manchon 20 correspondant sont en appui à l'intérieur des bagues 97 et 98 des ouvertures 95 et 96 correspondantes, le maneton 22b du manchon 20 est en regard de l'une de plusieurs pattes axiales 105, en nombre égal au nombre des pales du rotor, et dont l'extrémité axiale externe est solidaire d'un plateau de commande de pas 106, annulaire et bombé. Par une couronne d'ensembles vis-écrou non représentés, le bord radial interne du plateau de commande 106 est superposé et solidarisé au bord radial externe d'un flasque 107 de forme tronconique, afin de présenter une bonne rigidité, et qui est monté par emmanchement conique de sa partie centrale sur une fusée conique 108 d'un axe ou arbre 109 de commande collective de pas, qui est monté coulissant axialement dans l'arbre 81 d'entraînement du rotor 71, le flasque 107 étant retenu sur l'arbre 109 par un écrou 110 et un contre-écrou 111 vissés sur l'extrémité axiale externe filetée 108a de la fusée 108.

Chacune des pattes axiales 105 du plateau 106 est percée d'un alésage équipé d'une bague dans laquelle est logée la rotule 112 d'une liaison à rotule 113 raccordant le maneton 22b du manchon de pale 20 à la patte 105 correspondante. Cette liaison à rotule 113 peut, par exemple, comprendre un goujon à tête, dont l'extrémité filetée de la tige traverse un perçage du maneton 22b et reçoit un écrou goupillé sur cette tige en position vissée, tandis que la rotule est retenue par une goupille transversale sur la tige et contre la tête du goujon à tête.

En coopération avec le maneton 22b et la liaison à rotule 113 correspondants, chaque patte 105 constitue ainsi un levier de commande du pas de la pale correspondante, dont le pied de pale 3 est solidaire du manchon 20 correspondant. Les différents leviers ainsi constitués, le plateau 106, le flasque 107 et l'arbre 109 constituent un ensemble de commande collective du pas des pales du rotor 71, tel que tout déplacement axial de l'arbre 109 dans l'arbre 81 commande, par l'intermédiaire des leviers 105 et de leurs liaisons à rotule 113 aux manetons 22b, l'application d'un couple de torsion sur les manchons 20, et donc également sur les pieds de pale 3 et de toutes les pales, autour des axes longitudinaux de ces dernières. Ce couple de torsion provoque la rotation des manchons 20, et donc aussi des pales, autour des axes longitudinaux de ces dernières, en entraînant une torsion des faisceaux torsibles en lames 12a et 12b de la partie d'emplanture 4 de chaque pale. Chaque levier 105 est situé entre les deux collerettes 21a et 22a du manchon 20 correspondant, lesquelles collerettes sont écartées au maximum l'une de l'autre, ce qui permet d'assurer un meilleur appui de chaque pale et de réduire les efforts radiaux exercés par les collerettes 21a et 21b sur les bagues 97 et 98 correspondantes.

Afin de réduire le bruit provoqué par la rotation du rotor 71 dans son carénage 74 à un niveau qui n'est pas supérieur à celui obtenu avec un rotor équipé d'un nombre impair de pales, comme cela est le cas dans le brevet FR-2 542 695 précité, les pales en nombre pair du rotor 71 ne sont pas régulièrement réparties en direction circonférentielle autour de l'axe de rotation A du rotor 71, mais au contraire sont disposées sensiblement concentriquement autour de l'axe A selon une modulation azimuthale particulière, représentée sur la figure 21.

Les pales, en nombre pair, sont groupées en paires de pales sensiblement diamétralement opposées par rapport à l'axe A, les axes longitudinaux de toutes les pales, qui sont les axes longitudinaux de leurs parties d'emplanture 4, étant sensiblement concourants sur l'axe A.

Mais, dans cet exemple, les huit pales du rotor 71 sont telles que les deux pales 1A d'une paire de pales diamétralement opposées présentent, chacune, par rapport à chacune des deux pales 1B qui lui sont adjacentes parmi les trois autres paires de pales 1B, un calage angulaire différent de celui que présentent entre elles deux pales 1B adjacentes parmi les trois autres paires de pales 1B.

Ce calage angulaire différent correspond à un angle a1, formé entre l'axe longitudinal et radial d'une pale 1A et l'axe longitudinal et radial d'une pale 1B adjacente, qui est supérieur à l'angle a2, formé entre les axes longitudinaux et radiaux de deux pales 1B adjacentes.

Dans l'exemple de rotor des figures 20 et 21, a1 est de l'ordre de 58° et a2 est de l'ordre de 32°.

Ce calage angulaire différent est réalisé en intercalant une cale 114, en forme générale de coin, entre l'attache feuilletée 14 de chaque pale 1A et l'attache feuilletée 14 de chacune des deux pales 1B qui lui sont adjacentes, respectivement de part et d'autre de l'attache feuilletée 14 de la pale 1A considérée, dans un agencement dans lequel les attaches feuilletées 14 des six pales 1B, réparties en deux groupes diamétralement opposés, par rapport à l'axe A, de trois pales 1B adjacentes, sont côte-à-côte en appui par leurs faces latérales convergentes 16 et 19 (voir figure 1) en regard, selon une disposition déjà décrite ci-dessus en référence à la figure 13.

Chaque cale 114 est d'une structure feuilletée et constituée d'un empilement de couches de fibres agglomérées par une résine synthétique rigidifiée. De préférence, on utilise la même résine, les mêmes tissus des mêmes fibres, avec les mêmes orientations des fils de chaîne et de trame par rapport à la direction radiale vis-à-vis de l'axe A, que pour la réalisation des éléments feuilletés des attaches feuilletées 14. De plus, chaque cale 114 présente, parallèlement à l'axe A, la même épaisseur que les attaches feuilletées 14, et, perpendiculairement à cette direction, sensiblement la même forme des différentes couches empilées, c'est-à-dire une forme sensiblement trapézoïdale, avec des faces latérales opposées qui convergent vers l'axe A et sont contenues dans des plans qui se coupent sur l'axe A, et des évidements concaves, à concavité tournée latéralement et radialement vers l'extérieur, et en forme sensiblement de quart de surface latérale cylindrique, à la place des sommets adjacents à la grande base, en position radiale externe, de la forme trapézoïdale des couches de fibres, et en regard des évidements concaves de sensiblement même forme, délimités sur les attaches feuilletées 14 par les surfaces concaves telles que 15 et 18 sur la figure 1, de leurs éléments feuilletés 14a, 14b, 14c, 17a et 17b.

Chaque cale 114 constitue donc une fausse attache feuilletée, dans la mesure où elle ne se distingue essentiellement d'une attache feuilletée 14 que par le fait qu'aucune portion d'extrémité de faisceau torsible n'est intercalée dans l'empilement des couches de fibres qui la constitue.

En conséquence, les attaches feuilletées 14 des pales 1A et 1B, ainsi que les cales ou fausses attaches feuilletées 114 sont disposées côte-à-côte et accolées latéralement les unes aux autres par leurs faces latérales convergentes 16-19 vers l'axe A, de façon à former un disque segmenté autour de l'axe A, et deux attaches feuilletées 14 voisines ou une attache feuilletée 14 et une fausse attache feuilletée ou cale 114 voisines l'une de l'autre sont en butée radiale vers l'extérieur contre la face latérale cylindrique d'un même boulon ou goupille 100 de retenue sur le moyeu 89, par les parties en évidement concave des faces latérales en regard par lesquelles ces deux attaches feuilletées 14 voisines ou cette attache feuilletée 14 et cette fausse attache feuilletée ou cale 114 voisines sont accolées l'une à l'autre. Ainsi, chaque fausse attache feuilletée 114, comme chaque attache feuilletée 14, est retenue radialement vers l'extérieur par appui contre deux goupilles 100.

En variante, lorsque l'angle a1 du calage angulaire particulier des pales 1A est très supérieur à l'angle a2 entre les axes longitudinaux des autres pales 1B, plusieurs cales ou fausses attaches feuilletées 114 peuvent être disposées côte-à-côte entre deux attaches feuilletées 14, dans le disque segmenté constitué par l'ensemble des attaches feuilletées 14 et fausses attaches feuilletées 114.

Selon une autre variante, et en fonction du nombre pair de pales, le rotor peut comporter plusieurs paires de pales diamétralement opposées présentant des calages angulaires différents de celui des autres pales, et éventuellement également différents les uns des autres.

Enfin, comme représenté sur la figure 20, un capot bombé 115 peut être fixé par son bord radial externe à l'intérieur de la périphérie de la paroi radiale externe 93 du corps de moyeu 89, par exemple par encliquetage élastique, dans de petits évidements de la face interne de cette paroi 93, de languettes élastiques bombées 116 boulonnées en 117 sur le capot 115, afin de recouvrir l'ensemble de commande collective de pas des pales et de protéger le moyeu contre la pénétration de poussières, cailloux et autres salissures.

Cette réalisation du rotor multi-pales, à pas variable, permet un montage et un démontage aisés de ses différents composants, ce qui facilite considérablement les opérations d'entretien et diminue le coût de sa maintenance. En particulier, il est aisé de procéder au changement d'une pale endommagée, sans avoir à démonter de nombreux éléments. A cet effet, le flasque 107 peut être ajouré, afin de permettre l'accès aux écrous 101 ainsi qu'aux vis 104, sans avoir à démonter le flasque 107 et le plateau 106 de l'arbre de commande de pas 109.

Les pales peuvent être fabriquées essentiellement en composites à matrices thermodurcissables, comme dans les brevets précités, ou thermoplastiques, à fibres de renfort aramides, en verre ou carbone, et en particulier en résine de poly-éther-éther-cétone dite "PEEK", armée de fibres de carbone.

## Revendications

1. Pale de rotor avec son dispositif de liaison au moyeu (89) dudit rotor (71), la pale (1) comprenant :
- une coque rigide (5), à profil aérodynamique, allongée longitudinalement selon l'envergure de la pale (1), et prolongée par un pied de pale tubulaire (3), du côté relié au moyeu (89),
- une ossature résistante (6), au moins partiellement logée sensiblement longitudinalement dans la coque (5), et
- une partie d'emplanture (4), comprenant au moins un faisceau (12a, 12b) torsible d'attache de la pale (1), ledit faisceau étant allongé sensiblement dans le prolongement longitudinal de la coque (5) et torsible autour de son axe longitudinal, et réalisé en matériau composite comprenant des fibres sensiblement unidirectionnelles agglomérées par une résine synthétique rigidifiée, ledit faisceau (12a, 12b) étant relié à ladite ossature (6) et s'étendant au moins partiellement à l'extérieur de la coque (5) en traversant le pied de pale (3), de sorte à présenter, du côté opposé à la coque (5), une portion d'extrémité (13a, 13b) pour la liaison dudit faisceau (12a, 12b) au moyeu (89), caractérisée en ce que ledit dispositif de liaison comprend, pour au moins un faisceau (12a, 12b) torsible, une attache feuilletée (14) comportant au moins deux éléments feuilletés (14a, 14b, 14c), comprenant chacun un empilement d'au moins deux couches de fibres agglomérées par une résine synthétique rigidifiée, et entre lesquels ladite portion d'extrémité de liaison (13a, 13b), qui est sensiblement aplatie, est prise en sandwich et solidarisée auxdits éléments feuilletés (14a, 14b, 14c) par l'une au moins des résines du faisceau (12a, 12b) et de l'attache feuilletée (14), l'ensemble solidaire de ladite attache feuilletée (14) et de ladite portion d'extrémité (13a, 13b) étant en butée, vers la coque (5), contre des moyens (100) de retenue de l'attache feuilletée (14) et de la pale (1) au moyeu (89).

2. Pale selon la revendication 1, dont ladite partie d'emplanture (4) comprend au moins deux faisceaux (12a, 12b) torsibles, dont au moins les portions d'extrémité de liaison (13a, 13b) sensiblement aplaties sont espacées l'une de l'autre dans une direction sensiblement perpendiculaire auxdites portions aplaties (13a, 13b), caractérisée en ce que l'attache feuilletée (14) comprend au moins un élément feuilleté supplémentaire et intercalaire (14c), disposé entre lesdites portions aplaties (13a, 13b) de deux faisceaux voisins (12a, 12b), ledit élément feuilleté intercalaire (14c) ayant une structure feuilletée analogue à celle des autres éléments feuilletés (14a, 14b), et étant solidarisé auxdits deux faisceaux voisins (12a, 12b) par agglomération d'au moins une résine synthétique rigidifiée.

3. Pale selon l'une des revendications 1 et 2, caractérisée en ce que l'attache feuilletée (14) comprend également au moins un élément feuilleté de remplissage latéral (17a, 17b), d'une structure feuilletée analogue à celle des autres éléments feuilletés (14a, 14b, 14c), et disposé entre deux éléments feuilletés (14a,14c ; 14c, 14b) de ladite attache (14) et contre une face latérale de la portion d'extrémité (13a, 13b) aplatie d'un faisceau torsible (12a, 12b) prise en sandwich et solidarisée entre lesdits deux éléments feuilletés (14a, 14c ; 14c, 14b), ledit élément feuilleté de remplissage latéral (17a, 17b) étant solidarisé auxdits deux éléments feuilletés (14a, 14c; 14c, 14b) et à ladite portion d'extrémité aplatie (13a, 13b) dudit faisceau torsible (12a, 12b) par au moins une résine synthétique rigidifiée.

4. Pale selon l'une des revendications 1 à 3, caractérisée en ce que lesdits moyens de retenue de l'attache feuilletée (14) et de la pale (1) au moyeu (89) comprennent deux goupilles (100) démontables disposées de part et d'autre de la portion d'extrémité (13a, 13b) de liaison d'au moins un faisceau (12a, 12b) torsible à l'attache feuilletée (14), dont la forme est telle qu'elle s'appuie contre lesdites deux goupilles (100) destinées à être solidaires en rotation du moyeu (89).

5. Pale selon l'une des revendications 1 à 4, caractérisée en ce que ladite attache feuilletée (14) et chaque portion d'extrémité (13a, 13b) d'un faisceau torsible (12a, 12b) qui lui est solidaire, sont encastrées dans des moyens (92, 99, 100, 101) formant au moins une chape solidaire en rotation du moyeu (89).

6. Pale selon l'une des revendications 1 à 5, caractérisée en ce que l'attache feuilletée (14) présente, du côté opposé à ladite coque (5), une partie d'extrémité qui se rétrécit (16, 19) de façon à permettre d'accoler par leurs faces latérales au moins deux attaches feuilletées (14) liées à deux pales adjacentes (1B).

7. Pale selon l'une des revendications 1 à 5, caractérisée en ce que son attache feuilletée (44') est solidarisée à l'attache feuilletée (44') d'au moins une pale adjacente de sorte à réaliser une attache (44') en forme d'au moins une portion de disque annulaire.

8. Pale selon l'une quelconque des revendications 1 à 7, caractérisée en ce qu'au moins un faisceau torsible (12a, 12b) de ladite partie d'emplanture (4) est d'une seule pièce avec un faisceau longitudinal composite de même nature, que comprend au moins un longeron (6) de ladite ossature résistante, et que ledit faisceau torsible (12a, 12b) prolonge à l'extérieur de ladite coque (5).

9. Pale selon la revendication 8, caractérisée en ce que ladite partie d'emplanture (4, 4') comprend au moins deux faisceaux torsibles (12a, 12b ; 12'a, 12'b) qui s'écartent l'un de l'autre en direction de leur portion d'extrémité de liaison (13a,13b ; 13'a, 13'b) à partir d'une portion de jonction au longeron (6, 6'), à l'intérieur du pied tubulaire (3, 3') de la pale (1, 1').

10. Pale selon l'une quelconque des revendications 1 à 7, caractérisée en ce qu'au moins un faisceau torsible (62a, 62b) de ladite partie d'emplanture (54) est muni, à son extrémité tournée vers le pied de pale (53), de moyens de liaison amovible (55, 56, 57, 64') à ladite ossature résistante (52).

11. Pale selon la revendication 10, caractérisée en ce que ledit faisceau torsible (62a, 62b) est solidaire, à son extrémité tournée vers le pied de pale (53), d'une seconde attache feuilletée (64'), de structure analogue à celle (64) dont est solidaire sa portion (63a, 63b) d'extrémité de liaison au moyeu (46'), et qui est retenue, dans le pied de pale tubulaire (53), par des moyens de retenue amovibles (56, 57) sur ladite ossature résistante (52), ladite seconde attache feuilletée (64') venant en butée contre lesdits moyens de retenue (56, 57) en direction de ladite portion (63a, 63b) d'extrémité de liaison au moyeu (46').

12. Pale selon l'une des revendications 10 et 11, caractérisée en ce que ladite partie d'emplanture (54) comprend deux faisceaux torsibles (62a, 62b) agencés en deux lames sensiblement parallèles l'une à l'autre, mais espacées l'une de l'autre, dont les extrémités (63'a, 63'b) de liaison à ladite ossature (52) sont solidaires d'une même seconde attache feuilletée (64') sensiblement symétrique, par rapport au centre de la partie d'emplanture (54), de l'attache feuilletée (64) solidarisée aux portions (63a, 63b) d'extrémité de liaison des deux faisceaux (62a, 62b) au moyeu (46').

13. Rotor multi-pales, en particulier à pas variable, utilisable comme rotor arrière (71) notamment caréné (74) pour giravion, notamment hélicoptère, comprenant :
- un arbre d'entraînement (81), destiné à être entraîné en rotation autour d'un axe de rotation (A) du rotor (71),
- un moyeu (89) solidaire en rotation de l'arbre d'entraînement (81),
- plusieurs pales (1A, 1B), dont chacune est reliée au moyeu (89) par une partie d'emplanture (4) à au moins un faisceau (12a, 12b) en composite, allongé et torsible,
caractérisé en ce que chaque pale (1A, 1B) est une pale selon l'une des revendications 1 à 12, dont la partie d'emplanture (4) est reliée au moyeu (89) par ledit dispositif de liaison.

14. Rotor selon la revendication 13, caractérisé en ce qu'il comprend un nombre pair de pales (1A, 1B), et en ce que chacune des deux pales (1A) diamétralement opposées d'au moins une paire de pales présente, par rapport aux deux pales (1B) qui lui sont adjacentes, un calage angulaire (a₁) différent de celui (a₂) que présentent entre elles les pales (1B) adjacentes des autres paires de pales.

15. Rotor selon la revendication 14, caractérisé en ce que ledit calage angulaire différent (a₁) est obtenu en intercalant au moins une cale (114), réalisée, de préférence, sous la forme d'une fausse attache feuilletée, comprenant au moins un empilement de couches de fibres agglomérées par une résine synthétique rigidifiée, de part et d'autre de l'attache feuilletée (14) de liaison au moyeu (89) d'une pale (1A) à calage angulaire différent (a₁), entre ladite attache feuilletée (14) et celles (14) des deux pales (1B) qui lui sont adjacentes.

16. Rotor selon la revendication 15, caractérisé en ce que les attaches feuilletées (14) des différentes pales (1A, 1B) et les cales ou fausses attaches (114) sont accolées latéralement les unes aux autres par des faces convergeant vers l'axe de rotation (A) du rotor (71).

17. Rotor selon l'une des revendications 13 à 16, caractérisé en ce que les moyens de retenue des attaches feuilletées (14) des pales (1A, 1B) au moyeu (89) sont des goupilles (100) démontables appartenant à des ensembles vis-écrou (100-101) participant simultanément à la liaison du moyeu (89) à l'arbre d'entraînement (81), et en ce que le moyeu comprend :
a) un corps de moyeu (89), en forme de plateau annulaire (90, 91, 92) entourant avec du jeu radial l'arbre d'entraînement (81),
b) un manchon d'entraînement (85), entourant l'arbre d'entraînement (81) auquel il est solidarisé en rotation par des cannelures (83, 84), et présentant une bride (88) radiale d'appui contre le plateau annulaire (90, 91, 92), et
c) un autre plateau (99), de préférence en forme de disque annulaire entourant l'arbre d'entraînement (81) avec du jeu radial, et qui est retenu au plateau de moyeu (90, 91, 92) par lesdits ensembles vis-écrou (100, 101) fixant le plateau de moyeu (90, 91, 92) à la bride (88) du manchon (85) en retenant sur ledit plateau de moyeu les attaches feuilletées (14) qui sont encastrées côte-à-côte entre lesdits plateaux (90-91-92, 99), et
d) un flasque (102), vissé sur l'extrémité de l'arbre d'entraînement (81), dont il est ainsi solidaire axialement, et percé d'orifices taraudés dans lesquels sont vissées des vis de pression (104), dont les tiges (104a) prennent appui contre ledit autre plateau (99), pour le plaquer vers le plateau de moyeu (90-91-92) et contre les attaches feuilletées (14) afin de compléter leur encastrement entre lesdits plateaux (90-91-92, 99) et d'assurer un bon calage axial de l'empilement dudit autre plateau (99), des attaches feuilletées (14) du plateau de moyeu (90-91-92) et du manchon d'entraînement (85).

## Claims

1. A rotor blade with its linkage device for linking to the hub (89) of said rotor (71) the blade (1) comprising :
- a rigid shell (5) with aerodynamic profile, longitudinally elongated along the blade span and extended on the side connected to the hub (89) by a tubular blade root (3),
- a strengthened framework (6), which is at least partially housed substantially longitudinally in the shell (5), and
- a rooting part (4), comprising at least one twistable bundle (12a, 12b) for attachment of the blade (1), which bundle is elongated substantially in the longitudinal extension of the shell (5) and twistable about its longitudinal axis, and made from composite material comprising substantially unidirectional fibers which are agglomerated by a rigidified synthetic resin, said bundle (12a, 12b) being linked to the said framework (6) and extending at least partially outside the shell (5), passing through the blade root (3), so as to present, on the side opposite the shell (5), an end portion (13a, 13b) for linking said bundle (12a, 12b) to the hub (89), characterized in that said linkage device comprises, for at least one twistable bundle (12a, 12b), a laminate attachment (14) including at least two laminate elements (14a, 14b, 14c), each comprising a stack of at least two layers of fibers which are agglomerated by a rigidified synthetic resin, and between which said linking end portion (13a, 13b), which is substantially flattened, is sandwiched and fixed to said laminate elements (14a, 14b,14c) by at least one of the resins of the bundle (12a, 12b) and of the laminate attachment (14), the solid assembly of said laminate attachment (14) and said end portion (13a, 13b) being in abutment, toward the shell (5), against means (100) for holding the laminate attachment (14) and the blade (1) to the hub (89).

2. The blade as claimed in claim 1, whose rooting part (4) comprises at least two twistable bundles (12a, 12b), of which at least the substantially flattened end linkage portions (13a, 13b) are spaced apart in a direction substantially perpendicular to said flattened portions (13a, 13b), characterized in that the laminate attachment (14) comprises at least one additional and intermediate laminate element (14c) arranged between said flattened portions (13a, 13b) of two neighboring bundles (12a, 12b), said intermediate laminate element (14c) having a laminate structure similar to that of the other laminate elements (14a, 14b), and being solidly attached to said two neighboring bundles (12a, 12b) by agglomeration by at least one rigidified synthetic resin.

3. The blade as claimed in one of claims 1 and 2, characterized in that the laminate attachment (14) also comprises at least one laminate side filling element (17a, 17b), with a laminate structure similar to that of the other laminate elements (14a, 14b, 14c), and arranged between two laminate elements (14a, 14c; 14c, 14b) of said attachment (14) and against one side face of the flattened end portion (13a, 13b) of a twistable bundle (12a, 12b) sandwiched and fixed between said two laminate elements (14a, 14c; 14c, 14b), said laminate side filling element (17a, 17b) being solidly attached to said two laminate elements (14a, 14c; 14c, 14b) and to said flattened end portion (13a, 13b) of said twistable bundle (12a, 12b) by at least one rigidified synthetic resin.

4. The blade as claimed in one of claims 1 to 3, characterized in that said means for holding the laminate attachment (14) and the blade (1) to the hub (89) comprise two detachable pins (100), arranged on either side of the linkage end portion (13a, 13b) of at least one twistable bundle (12a, 12b) to the laminate attachment (14), the shape of which is such that it bears against said two pins (100), intended to be integral in rotation with the hub (89).

5. The blade as claimed in one of claims 1 to 4, characterized in that said laminate attachment (14) and each end portion (13a, 13b) of a twistable bundle (12a, 12b) which is fixed thereto are clamped in means (92, 99, 100, 101) forming at least one grip linked in rotation to the hub (89).

6. The blade as claimed in one of claims 1 to 5, characterized in that the laminate attachment (14) has, on the side opposite said shell (5), an end part which narrows (16, 19) so as to allow bonding by their side faces of at least two laminate attachments (14) linked to two adjacent blades (1B).

7. The blade as claimed in one of claims 1 to 5, characterized in that its laminate attachment (44') is made integral with the laminate attachment (44') of at least one adjacent blade so as to make an attachment (44') in the shape of at least one annular disk portion.

8. The blade as claimed in one of claims 1 to 7, characterized in that at least one twistable bundle (12a, 12b) of said rooting part (4) is integral with a composite longitudinal bundle of the same nature, included in at least one spar (6) of said strengthened framework and which said twistable bundle (12a, 12b) extends outside said shell (5).

9. The blade as claimed in claim 8, characterized in that said rooting part (4, 4') comprises at least two twistable bundles (12a, 12b; 12'a, 12'b) which separate from each other in the direction of their end linkage portion (13a, 13b; 13'a, 13'b) starting from a portion for joining to the spar (6, 6'), inside the tubular root (3, 3') of the blade (1, 1').

10. The blade as claimed in one of claims 1 to 7, characterized in that at least one twistable bundle (62a, 62b) of said rooting part (54) is fitted, at its end pointing toward the blade root (53), with removable means (55, 56, 57, 64') for linking to said strengthened framework (52).

11. The blade as claimed in claim 10, characterized in that said twistable bundle (62a, 62b) is solidly attached, at its end pointing toward the blade root (53), to a second laminate attachment (64'), with a structure similar to that (64) to which its end portion (63a, 63b) for linkage to the hub (46') is solidly attached, and which is held, in the tubular blade root (53), by removable holding means (56, 57) on said strengthened framework (52), said second laminate attachment (64') being in abutment against said holding means (56, 57) in the direction of said end portion (63a, 63b) for linkage to the hub (46').

12. The blade as claimed in one of claims 10 and 11, characterized in that said rooting part (54) comprises two twistable bundles (62a, 62b) arranged in two strips which are substantially parallel to each other but spaced apart, of which the ends (63'a, 63'b) for linkage to said framework (52) are solidly attached to one and the same second laminate attachment (64') which is substantially symmetrical with respect to the center of the rooting part (54), with the laminate attachment (64) solidly attached to the end portions (63a, 63b) for linking the two bundles (62a, 62b) to the hub (46').

13. A multiblade rotor, in particular with variable pitch, which can be used as a tail rotor (71), especially a ducted tail rotor (74) for a rotorcraft, especially a helicopter, comprising:
- a drive shaft (81), intended to be driven in rotation about an axis of rotation (A) of the rotor (71),
- a hub (89) linked in rotation with the drive shaft (81),
- a plurality of blades (1A, 1B), each of which is joined to the hub (89) by a rooting part (4) with at least one composite, elongate twistable bundle (12a, 12b), characterized in that each blade (1A, 1B) is a blade as claimed in one of claims 1 to 12, the rooting part (4) of which is joined to the hub (89) by said linkage device.

14. The rotor as claimed in claim 13, characterized in that it comprises an even number of blades (1A, 1B), and in that each of the two diametrically opposite blades (1A) of at least one pair of blades has, with respect to the two blades (1B) which are adjacent to it, an angular offset (a₁) which is different from that (a₂) which the adjacent blades (1B) of the other pairs of blades have between them.

15. The rotor as claimed in claim 14, characterized in that said different angular offset (a₁) is obtained by inserting at least one wedge (114), preferably made in the form of a laminate false attachment, comprising at least one stack of layers of fibers which are agglomerated by a rigidified synthetic resin, on either side of the laminate attachment (14) for linking to the hub (89) a blade (1A) with different angular offset (a₁), between said laminate attachment (14) and those (14) of the two blades (1B) which are adjacent to it.

16. The rotor as claimed in claim 15, characterized in that the laminate attachments (14) of the different blades (1A, 1B) and the wedges or false attachments (114) are laterally joined side-by-side to each other by faces which converge toward the axis of rotation (A) of the rotor (71).

17. The rotor as claimed in one of claims 13 to 16, characterized in that the means for holding the laminate attachments (14) of the blades (1A, 1B) to the hub (89) are removable pins (100) belonging to screw-nut assemblies (100-101) simultaneously participating in the linking of the hub (89) to the drive shaft (81), and wherein the hub comprises:
a) a hub body (89), in the form of an annular plate (90, 91, 92) surrounding the drive shaft (81) with radial clearance,
b) a drive sleeve (85), surrounding the drive shaft (81) with which it is linked in rotation by splines (83, 84), and having a radial flange (88) for bearing against the annular plate (90, 91, 92), and
c) another plate (99), preferably in the shape of an annular disk surrounding the drive shaft (81) with radial clearance, and which is held to the hub plate (90, 91, 92) by said screw-nut assemblies (100, 101) fixing the hub plate (90, 91, 92) to the flange (88) of the sleeve (85), while holding on said hub plate the laminate attachments (14) which are clamped side-by-side between said plates (90-91-92, 99), and
d) a flange disk (102), screwed onto the end of the drive shaft (81), with which it is thus axially linked, and pierced with tapped orifices into which pressure screws (104) are screwed, the shanks (104a) of which pressure screws bear against said other plate (99), in order to press it toward the hub plate (90-91-92) and against the laminate attachments (14) in order to complete their clamping between said plates (90-91-92, 99) and to ensure good axial offset of the stack of said other plate (99), of the laminate attachments (14) of the hub plate (90-91-92) and of the drive sleeve (85).

## Patentansprüche

1. Rotorblatt mit Verbindungsvorrichtung zur Nabe (89) dieses Rotors (71), wobei das Blatt (1) umfaßt:
- eine steife Schale (5) mit aerodynamischem Profil, die sich der Länge nach entsprechend der Spannweite des Blattes (1) erstreckt und durch einen röhrenförmigen Blattfuß (3) an der mit der Nabe (89) verbundenen Seite verlängert ist,
- ein widerstandsfähiges Tragwerk (6), das zumindest teilweise im wesentlichen der Länge nach in der Schale (5) untergebracht ist, und
- ein Wurzelteil (4), das zumindest ein verdrehbares Anschlußbündel (12a, 12b) des Blattes (1) aufweist, wobei sich dieses Bündel im wesentlichen in der Längsverlängerung der Schale (5) erstreckt und um seine Längsachse verdrehbar ist und aus Verbundmaterial realisiert ist, das im wesentlichen in einer Richtung verlaufende, durch ein versteiftes synthetisches Harz verpreßte Fasern umfaßt, wobei dieses Bündel (12a, 12b) mit dem genannten Tragwerk (6) verbunden ist und sich zumindest teilweise außerhalb der Schale (5) unter Durchquerung des Blattfußes (3) erstreckt, so daß an der zur Schale (5) entgegengesetzten Seite ein Endbereich (13a, 13b) zur Verbindung des Bündels (12a, 12b) mit der Nabe (89) vorhanden ist, **dadurch gekennzeichnet,** daß die genannte Verbindungsvorrichtung für wenigstens ein verdrehbares Bündel (12a, 12b) einen blätterigen Anschluß (14) umfaßt, der zumindest zwei blätterige, jeweils einen Stapel aus wenigstens zwei Lagen von durch ein versteiftes synthetisches Harz verpreßten Fasern enthaltende Elemente (14a, 14b, 14c) und dazwischen den genannten Verbindungsendbereich (13a, 13b) aufweist, der im wesentlichen abgeflacht, in Sandwichanordnung gefaßt und mit den blätterigen Elementen (14a, 14b, 14c) durch wenigstens eines der Harze des Bündels (12a, 12b) und des blätterigen Anschlusses (14) zu einem Stück vereinigt ist, wobei die zu einem Stück aus dem blätterigen Anschluß (14) und aus dem Endbereich (13a, 13b) vereinigte Gruppe zur Schale (5) hin gegen Rückhaltemittel (100) des blätterigen Anschlusses (14) und des Blattes (1) an der Nabe (89) widergelagert ist.

2. Blatt nach Anspruch 1, dessen Wurzelteil (4) wenigstens zwei verdrehbare Bündel (12a, 12b) aufweist, von denen zumindest die im wesentlichen abgeflachten Verbindungsendbereiche (13a, 13b) in einer zu den abgeflachten Bereichen (13a, 13b) im wesentlichen senkrechten Richtung mit Abstand zueinander gehalten sind, **dadurch gekennzeichnet,** daß der blätterige Anschluß (14) mindestens ein zusätzliches und zwischengeschachteltes blätteriges Element (14c) aufweist, das zwischen den genannten abgeflachten Bereichen (13a, 13b) zweier benachbarter Bündel (12a, 12b) angeordnet ist, wobei das zwischengeschachtelte blätterige Element (14c) eine zur Struktur der anderen blätterigen Elemente (14a, 14b) analoge blätterige Struktur hat und mit den beiden benachbarten Bündeln (12a, 12b) durch Verpressung mit mindestens einem versteiften synthetischen Harz zu einem Stück vereinigt ist.

3. Blatt nach einem der Ansprüche 1 und 2, **dadurch gekennzeichnet,** daß der blätterige Anschluß (14) wenigstens auch ein blätteriges Element (17a, 17b) zur seitlichen Auffüllung mit einer zur Struktur der anderen blätterigen Elemente (14a, 14b, 14c) analogen blätterigen Struktur aufweist, das zwischen zwei blätterigen Elementen (14a, 14c; 14c, 14b) des genannten Anschlusses (14) und gegen eine seitliche Fläche des abgeflachten Endbereichs (13a, 13b) eines verdrehbaren Bündels (12a, 12b) angeordnet ist, und das in Sandwichanordnung gefaßt und zwischen den beiden genannten blätterigen Elementen (14a, 14c; 14c, 14b) zu einem Stück vereinigt ist, wobei das genannte blätterige Element (17a, 17b) zur seitlichen Auffüllung mit den beiden blätterigen Elementen (14a, 14c; 14c, 14b) und mit dem genannten abgeflachten Endbereich (13a, 13b) des verdrehbaren Bündels (12a, 12b) durch mindestens ein versteiftes synthetisches Harz zu einem Stück vereinigt ist.

4. Blatt nach einem der Ansprüche 1 bis 3, **dadurch gekennzeichnet,** daß die Rückhaltemittel des blätterigen Anschlusses (14) und des Blattes an der Nabe (89) zwei abnehmbare Stifte (100) aufweisen, die auf beiden Seiten des Verbindungsendbereichs (13a, 13b) wenigstens eines verdrehbaren Bündels (12a, 12b) am blätterigen Anschluß (14) angeordnet sind, wobei dessen Ausgestaltung so ist, daß er sich gegen die beiden Stifte (100) abstützt, die dazu bestimmt sind, bei Rotation der Nabe (89) zu einem Stück vereinigt zu sein.

5. Blatt nach einem der Ansprüche 1 bis 4, **dadurch gekennzeichnet,** daß der genannte blätterige Anschluß (14) und jeder Endbereich (13a, 13b) eines verdrehbaren Bündels (12a, 12b), das damit zu einem Stück vereinigt ist, in Mitteln (92, 99, 100, 101) eingebaut sind, die zumindest eine bei Rotation der Nabe zu einem Stück vereinigte Kappe bilden.

6. Blatt nach einem der Ansprüche 1 bis 5, **dadurch gekennzeichnet,** daß der blätterige Anschluß (14) auf der der Schale (5) gegenüberliegenden Seite einen Endteil aufweist, der sich verschmälert (16, 19), so daß aufgrund ihrer seitlichen Flächen der Aneinanderbau von zumindest zwei blätterigen, mit zwei benachbarten Blättern (1B) verbundenen Anschlüssen (14) möglich ist.

7. Blatt nach einem der Ansprüche 1 bis 5, **dadurch gekennzeichnet,** daß sein blätteriger Anschluß (44') mit dem blätterigen Anschluß (44') zumindest eines benachbarten Blattes zu einem Stück vereinigt ist, so daß ein Anschluß (44') in Gestalt wenigstens eines Teils einer ringförmigen Scheibe realisiert wird.

8. Blatt nach einem beliebigen der Ansprüche 1 bis 7, **dadurch gekennzeichnet,** daß wenigstens ein verdrehbares Bündel (12a, 12b) des Wurzeltelis (4) aus einem einzigen Stück mit einem Verbund-Langsbündel von gleicher Beschaffenheit ist, das zumindest einen Längsträger (6) des genannten widerstandsfähigen Tragwerks umfaßt und das das genannte verdrehbare Bündel (12a, 12b) außerhalb der genannten Schale (5) verlängert.

9. Blatt nach Anspruch 8, **dadurch gekennzeichnet,** daß das Wurzelstück (4, 4') wenigstens zwei verdrehbare Bündel (12a, 12b; 12'a, 12'b) aufweist, die sich, ausgehend von einem Verbindungsabschnitt zum Längsträger(6, 6') im Inneren des röhrenförmigen Fußes (3,3') des Blattes (1, 1'), voneinander in Richtung zu ihren Verbindungsendbereichen (13a, 13b; 13'a, 13'b) entfernen.

10. Blatt nach einem beliebigen der Ansprüche 1 bis 7, **dadurch gekennzeichnet,** daß wenigstens ein verdrehbares Bündel (62a, 62b) des genannten Wurzelteils (54) an seinem dem Blattfuß (53) zugewandten Ende mit lösbaren Verbindungsmitteln (55, 56, 57, 64') zum genannten widerstandsfähigen Tragwerk (52) versehen ist.

11. Blatt nach Anspruch 10, **dadurch gekennzeichnet,** daß das genannte verdrehbare Bündel (62a, 62b) an seinem dem Blattfuß (53) zugewandten Ende mit einem zweiten blätterigen Anschluß (64') von einer Struktur, die analog zu derjenigen des Anschlusses (64) ist, dessen Verbindungsendbereich (63a, 63b) an der Nabe (46') vereinigt ist, zu einer Einheit vereinigt ist, der beim röhrenförmigen Blattfuß (53) durch lösbare Rückhaltemittel (56, 57) an dem genannten widerstandsfähigen Tragwerk (52) zurückgehalten wird, wobei der genannte zweite blätterige Anschluß (64') gegen die genannten Rückhaltemittel (56, 57) in Richtung des genannten Verbindungsendbereichs (63a, 63b) an der Nabe (46') zum Anschlag kommt.

12. Blatt nach einem der Ansprüche 10 und 11, **dadurch gekennzeichnet,** daß der genannte Wurzelteil (54) zwei verdrehbare Bündel (62a, 62b) aufweist, die in zwei im wesentlichen zueinander parallelen, jedoch zueinander beabstandeten Streifen angeordnet sind, deren Verbindungsenden (63'a, 63'b) am genannten Tragwerk (52) mit einem gleichen zweiten blätterigen Anschluß (64') zu einem Stück vereinigt sind, der in bezug auf das Zentrum des Wurzelteils (54) im wesentlichen symmetrisch mit dem blätterigen Anschluß (64) ist, der mit den Verbindungsendbereichen (63a, 63b) der beiden Bündel (62a, 62b) an der Nabe (46') zu einem Stück vereinigt ist.

13. Mehrblatt-Rotor, insbesondere mit variablem Steigungswinkel, verwendbar als insbesondere stromlinienförmiger (74) Heckrotor (71) für Drehflügler, insbesondere Hubschrauber, umfassend:
- eine Antriebswelle (81), die dazu vorgesehen ist, um eine Rotationsachse (A) des Rotors (71) in Drehung versetzt zu werden,
- eine bei Rotation mit der Antriebswelle (81) vereinigte Nabe (89),
- mehrere Blätter (1A, 1B), die mit der Nabe (89) jeweils durch ein Wurzelteil (4) mit wenigstens einem länglichen und verdrehbaren Bündel (12a, 12b) aus Verbundmaterial verbunden sind, **dadurch gekennzeichnet,** daß jedes Blatt (1A, 1B) ein Blatt gemäß einem der Ansprüche 1 bis 12 ist, dessen Wurzelteil (4) mit der Nabe (89) durch die genannte Verbindungseinrichtung verbunden ist.

14. Rotor nach Anspruch 13, **dadurch gekennzeichnet,** daß er eine geradzahlige Anzahl von Blättern (1A, 1B) aufweist und daß jedes der beiden diametral gegenüberstehenden Blätter (1A) mindestens eines Blattpaares in bezug auf zwei Blätter (1B), die ihm benachbart sind, eine winkelmäßige Stellung (a₁) aufweist, die unterschiedlich zu derjenigen (a₂) ist, die die Blätter (1B) zueinander aufweisen, die benachbart zu den anderen Blattpaaren sind.

15. Rotor nach Anspruch 14, **dadurch gekennzeichnet,** daß die genannte unterschiedliche winkelmäßige Stellung (a₁) durch Einfügung eines Keils (114) erreicht wird, der vorzugsweise in Gestalt eines falschen blätterigen Anschlusses realisiert wird, der zumindest einen Stapel von Lagen aus Fasern umfaßt, die durch ein versteiftes synthetisches Harz verpreßt sind, und zwar zu beiden Seiten des blätterigen Anschlusses (14) zur Verbindung an der Nabe (89) eines Blattes (1A) mit unterschiedlicher winkelmäßiger Stellung (a₁) zwischen dem genannten blätterigen Anschluß (14) und denjenigen (14) der beiden Blätter(1B), die ihm benachbart sind.

16. Rotor nach Anspruch 15, **dadurch gekennzeichnet,** daß die blätterigen Anschlüsse (14) der verschiedenen Blätter (1A, 1B) und die Keile oder falschen Anschlüsse (114) durch zur Rotationsachse (A) des Rotors (71) konvergierende Flächen seitlich aneinandergefügt sind.

17. Rotor nach einem der Ansprüche 13 bis 16, **dadurch gekennzeichnet,** daß die Rückhaltemittel der blätterigen Anschlüsse (14) der Blätter (1A, 1B) an der Nabe (89) abnehmbare Stifte (100) sind, die Schraube-Mutter-Gruppen (100-101) angehören, die zugleich an der Verbindung der Nabe (89) mit der Antriebswelle (81) teilnehmen, und daß die Nabe umfaßt:
a) einen Körper der Nabe (89) in Gestalt eines Ringtellers (90, 91, 92), der mit radialem Spiel die Antriebswelle (81) umgibt,
b) einen Antriebsstutzen (85), der die Antriebswelle (81) umgibt, mit der er bei Rotation durch Riffelungen (83, 84) zu einem Stück vereinigt ist, und der einen radialen Stützflansch (88) gegen den Ringteller (90, 91, 92) aufweist, und
c) einen weiteren, vorzugsweise ringsoheibenförmig ausgebildeten Teller (99), der die Antriebswelle (81) mit radialem Spiel umgibt und der am Nabenteller (90, 91, 92) durch die genannten Schraube-Mutter-Gruppen (100, 101) rückgehalten wird, die den Nabenteller (90, 91, 92) am Stützflansch (88) des Stutzens (85) befestigen, indem auf dem genannten Nabenteller die blätterigen Anschlüsse (14), die Seite an Seite zwischen den genannten Tellern (90-91-92, 99) eingebaut sind, rückgehalten werden, und
d) ein Lagerschild (102), das auf das Ende der Antriebswelle (81) geschraubt ist, wodurch es somit axial ein Stück ist, und das von Gewindebohrungen durchdrungen ist, in denen Klemmschrauben (104) eingeschraubt sind, deren Schäfte (104a) sich gegen den genannten weiteren Teller abstützen, um letzteren zum Nabenteller (90-91-92) hin und gegen die blätterigen Anschlüsse (14) aufzulegen, um deren Einbau zwischen die genannten Teller (90-91-92, 99) zu vervollständigen und eine gute axiale Positionierung des Stapels aus dem genannten weiteren Teller (99), den blätterigen Anschlüssen (14), dem Nabenteller (90-91-92) und dem Antriebsstutzen (85) zu gewährleisten.
